# EUROPÄISCHE PATENTSCHRIFT

(11) **EP 0 103 681 B1**
(45) Veröffentlichungstag und Bekanntmachung des Hinweises auf die Patenterteilung: **30.07.1986**
(21) Anmeldenummer: 83106035.5
(22) Anmeldetag: 21.06.1983
(51) Int. Cl.: C07C 69/76, C07C 69/74, C07C 69/773, C09K 19/12, C09K 19/14

(54) **Tetra- und pentacyclische Monoester**
Tetra- and pentacyclic monoesters
Monoesters tétra- et pentacycliques

(30) Priorität: 28.07.1982 CH 4581/82; 05.05.1983 CH 2443/83
(43) Veröffentlichungstag der Anmeldung: 28.03.1984
(73) Patentinhaber: F. HOFFMANN-LA ROCHE & CO. Aktiengesellschaft, 4002 Basel (CH)
(72) Erfinder: Petrzilka, Martin, Dr., CH-4303 Kaiseraugst (CH); Schadt, Martin, Dr., CH-4411 Seltisberg (CH); Villiger, Alois, Dr., CH-4055 Basel (CH)
(74) Vertreter: Cottong, Norbert A.

## Beschreibung

Die vorliegende Erfindung betrifft neue flüssigkristalline Verbindungen, nämlich die tetra- und pentacyclischen Monoester der allgemeinen Formel 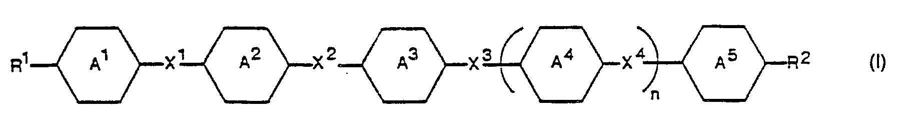 worin n für die Zahl 0 oder 1 steht ; eine der Gruppen X¹ oder X² eine Estergruppe -COo- oder -OOC- und die übrigen der Gruppen X¹, X², X³ und X⁴ eine einfache Kovalenzbindung bedeuten, oder eine dieser Gruppen auch die Aethylengruppe ―CH₂CH₂― bedeutet ; die Ringe A¹ und A⁵ eine Gruppe der Formel 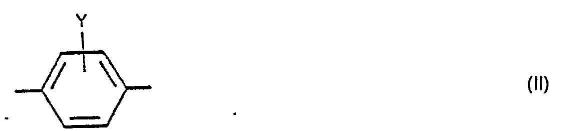 oder trans-1, 4-Cyclohexylen bezeichnen ; die Ringe A², A³ und A⁴ eine Gruppe der Formel oder, sofern sie nicht mit mindestens einem der beiden andern dieser Ringe durch eine einfache Kovalenzbindung verknüpft sind, auch trans-1,4-Cyclohexylen darstellen ; mit der Massgabe, dass mindestens einer der vorhandenen Ringe eine Gruppe der Formel II bezeichnet; Y Wasserstoff oder an einem der Ringe der Formel II, welcher nicht mit einem weiteren Ring über eine einfache Kovalenzbindung verknüpft ist, auch Fluor, Chlor oder Methyl bedeutet ; und R¹ und R² geradkettiges Alkyl mit 1 bis 7 Kohlenstoffatomen oder an einem Ring der Formel II auch geradkettiges Alkoxy mit 1 bis 7 Kohlenstoffatomen bezeichnen.

Die Erfindung betrifft ferner die Herstellung der Verbindungen der obigen Formel I, flüssigkristalline Gemische, welche Verbindungen der obigen Formel I enthalten, sowie die Verwendung für elektrooptische und chromatographische Zwecke.

Die erfindungsgemässen Verbindungen enthalten 4 oder 5 p-Phenylen- und/oder trans-1,4-Cyclohe- xylengruppen, wobei eine der gegebenenfalls vorhandenen p-Phenylengruppen, die nicht über eine einfache Kovalenzbindung direkt an einen der übrigen Ringe (p-Phenylen oder trans-1,4-Cyclohexylen) gebunden sind, einen lateralen Fluor-, Chlor- oder Methylsubstituenten aufweisen kann. Mindestens einer der vorhandenen Ringe (d.h. mindestens einer der Ringe A¹-A⁵, wenn n = 1 ist, bzw. mindestens einer der Ringe A¹, A², A³ und A⁵, wenn n = 0 ist) bezeichnet eine Gruppe der Formel II.

Diejenigen der Ringe A², A³ und A⁴, welche über eine einfache Kovalenzbindung direkt an mindestens einen der beiden andern dieser Ringe gebunden sind, bedeuten p-Phenylen. Hingegen kann eine gegebenenfalls für Ring A² vorhandene trans-1,4-Cyclohexylengruppe mit Ring A' und eine gegebenenfalls für Ring A³ bzw. A⁴ vorhandene trans-1,4-Cyclohexylengruppe mit Ring A⁵ über eine einfache Kovalenzbindung direkt verknüpft sein.

Ist X¹ eine Estergruppe, so bedeuten X², X³ und X⁴ einfache Kovalenzbindungen oder eine dieser Gruppen auch die Aethylengruppe. Entsprechend bedeuten X¹, X³ und X⁴ einfache Kovalenzbindungen oder eine dieser Gruppen auch die Aethylengruppe, wenn X² eine Estergruppe darstellt.

Die Reste R¹ und R² können gleich oder verschieden sein und Methyl, Aethyl, Propyl, Butyl, Pentyl, Hexyl, Heptyl, Methoxy, Aethoxy, Propyloxy, Butyloxy, Pentyloxy, Hexyloxy oder Heptyloxy bedeuten.

Flüssige Kristalle haben in den letzten Jahren vor allem als Dielektrika in Anzeigevorrichtungen stark an Bedeutung gewonnen, da die optischen Eigenschaften solcher Substanzen durch eine angelegte Spannung beeinflusst werden können. Elektro-optische Vorrichtungen auf der Basis von Flüssigkristallen sind dem Fachmann gut bekannt und können auf verschiedenen Effekten beruhen, wie beispielsweise der dynamischen Streuung, der Deformation aufgerichteter Phasen (DAP-Typ), dem Schadt-Helfrich-Effekt (Drehzelle), dem Guest-Host-Effekt oder einem cholesterisch-nematischen Phasenübergang.

Die Flüssigkristalle müssen einer Reihe von Anforderungen genügen, damit sie als Dielektrika für elektro-optische Anzeigevorrichtungen geeignet sind. Beispielsweise müssen sie eine hohe chemische Stabilität gegenüber Umwelteinflüssen, z. B. Wärme, Luft, Feuchtigkeit und dergleichen, besitzen, photochemisch stabil und farblos sein, kurze Ansprechzeiten und nicht zu hohe Viskosität aufweisen, im ganzen Temperaturbereich, in welchem die Flüssigkristallzelle betrieben werden soll, eine nematische bzw. cholesterische Mesophase besitzen und einen guten Kontrast ergeben. Weitere Eigenschaften, wie beispielsweise die Schwellenspannung, die dielektrische Anisotropie und die elektrische Leitfähigkeit, .müssen je nach verwendetem Zellentyp unterschiedliche Bedingungen erfüllen.

Da es im allgemeinen nicht möglich ist alle gewünschten und zum Teil widersprüchlichen Eigenschaften mit einer einzigen Verbindung zu erreichen, wird meist versucht, durch Mischen mehrerer Komponenten die Eigenschaften für die jeweiligen Anwendungen zu optimieren. Hierbei ist jedoch wichtig, dass die Komponenten untereinander keine chemischen Reaktionen eingehen und gut mischbar sind. Ferner sollten die gebildeten Mischungen keine smektischen Mesophasen aufweisen.

Da ferner die gebräuchlichen niederviskosen Komponenten im allgemeinen nur niedrige Klärpunkte aufweisen oder nicht selbst flüssigkristallin sind, müssen den Mischungen häufig Komponenten mit hohen Klärpunkten zugesetzt werden. Letztere haben jedoch im allgemeinen den Nachteil, dass sie zugleich auch die Viskosität der Mischungen stark erhöhen.

Aus JP-A-57-70 839 (Patent Abstracts of Japan, Band 6, Nr. 149) sind bereits smektische trans-4-(trans-4-Alkylcyclohexyl)-cyclohexylester von trans-4-Alkylcyclohexancarbosäuren und trans-4-(trans-4-Alkylcyclohexyl)cyclohexancarbonsäuren bekannt und aus JP-A-57-9742 (Patent Abstracts of Japan, Band 6, Nr. 73) flüssigkristalline Derivate des 4'-Cyclohexyl-4-biphenyl-carbonsäurephenylesters mit endständigen Fluor-, Chlor-, Brom- oder Cyano-substituenten. Ferner wurden in DE-A-2931 637 flüssigkristalline Monoester mit einem Bicyclo [2.2.2] octan-Ring und in DE-A-2 800 553 tricyclische Monoester mit flüssigkristallinen Eigenschaften beschrieben.

Verbindungen der obigen Formel I, worin n für die Zahl 0 steht, sowie deren Herstellung und deren Verwendung in flüssigkristallinen Gemischen und für elektro-optische Zwecke werden zum Teil auch in EP-A-87032 (benannte Vertragsstaaten : AT, CH, DE, FR, GB, IT, Ll, NL), EP-A-87102 (benannte Vertragsstaaten : CH, DE, FR, GB, IT, LI), DE-A-3 324 774 und GB-A-2 124 218 offenbart. EP-A-87032 beschreibt Verbindungen der obigen Formel I, worin n für die Zahl 0 steht, X² ―COO― oder ―OOC― bedeutet, X¹ und X³ einfache Kovalenzbindungen bedeuten und entweder die Ringe A¹ und A² oder die Ringe A³ und A⁵ trans-1,4-Cyclohexylen bezeichnen. EP-A-87102 beschreibt p-(trans-4-Alkylcyclohexyl)-phenyi-4'-alkylbiphenyl-4"-carboxylate sowie die Verbindungen der obigen Formel I, worin n für die Zahl 0 steht, X²―COO-oder―OOC―bedeutet, X¹ und X³ einfache Kovalenzbindungen bedeuten und R¹ und R² Propyl bezeichnen. DE-A-3 324 774 und GB-A-2124 218 beschreiben die Verbindungen der obigen Formel I, worin n die Zahl 0, X¹ -COO-, X² eine einfache Kovalenzbindung, X³ ―CH₂CH₂―, die Ringe A¹ und A⁵ trans-1,4-Cyclohexylen und die Ringe A² und A³ 1,4-Phenylen bedeuten.

Weiterhin wurden flüssige Kristalle in letzter Zeit mit Erfolg auch als stationäre Phasen in der Gaschromatographie eingesetzt. Die bekannten stationären Phasen haben aber vor allem den Nachteil, dass sie nur bis zu Temperaturen von etwa 180 °C verwendet werden können.

Aufgabe der vorliegenden Erfindung war daher die Bereitstellung neuer flüssigkristalliner Verbindungen, welche die erwähnten Nachteile nicht oder in geringerem Masse aufweisen.

Es wurde nun gefunden, dass sich die erfindungsgemässen Verbindungen sehr gut als Komponenten flüssigkristalliner Mischungen eignen, da sie überraschenderweise zugleich grosse Mesophasenbereiche mit hohen Klärpunkten und zum Teil erstaunlich niedrigen Schmelzpunkten sowie niedere Viskosität und entsprechend kurze Ansprechzeiten aufweisen. Die erfindungsgemässen Verbindungen besitzen ferner kleine absolute Werte der dielektrischen Anisotropie und im allgemeinen eine nematische und/oder smektische Mesophase. Weiterhin besitzen sie eine gute chemische und photochemische Stabilität und sind farblos. Die erfindungsgemässen Verbindungen sind breit anwendbar, das sie mit anderen Flüssigkristallen gut mischbar sind, und da sich durch Mischen mit anderen flüssigkristallinen und/oder nicht flüssigkristallinen Verbindungen leicht Flüssigkristalle mit nematischen oder cholesterischen Mesophasen herstellen lassen. Durch besonders gute Löslichkeit zeichnen sich vor allem diejenigen Verbindungen aus, welche einen lateralen Fluor-, Chlor- oder Methylsubstituenten aufweisen. Aufgrund der oben genannten Eigenschaften sind die erfindungsgemässen Verbindungen insbesondere zur Erhöhung der Klärpunkte niederviskoser Mischungen geeignet, da hierbei die Viskosität nicht oder nur unwesentlich erhöht wird.

Ferner haben sich die erfindungsgemässen Verbindungen als äusserst trennfähige, stationäre Phasen in der Gaschromatographie erwiesen, und können aufgrund ihrer hohen Klärpunkte und Siedepunkte bei deutlich höheren Arbeits-temperaturen verwendet werden als die vorbekannten Phasen. Vielfach lassen sie sich problemlos bis zu den in der Gaschromatographie üblichen Arbeitstemperaturen von etwa 250 °C verwendet.

Die erwähnten Vorteile bei der Verwendung in der Gaschromatographie und bei der Klärpunktserhöhung flüssigkristalliner Dielektrika gelten in besonderem Masse für die pentacyclischen Verbindungen (n = 1) der Formel I.

Die Verbindungen der Formel l, worin Y Wasserstoff und somit Formel II 1,4-Phenylen bedeutet (d. h. diejenigen Verbindungen, welche keinen lateralen Substituenten aufweisen), sind bevorzugt.

Ferner steht vorzugsweise mindestens einer der Ringe für trans-1,4-Cyclohexylen. Enthält Formel I eine Aethylengruppe ―CH₂CH₂― so bedeutet vorzugsweise X¹ die Aethylengruppe (und dementsprechend X² eine Estergruppe). Ferner ist in Verbindungen der Formel I, worin eine der Gruppen X¹-X⁴ die Aethylengruppe bedeutet, mit Vorteil mindestens einer der beiden direkt an die Aethylengruppe gebundenen Ringe trans-1,4-Cyclohexylen. Bevorzugt sind jedoch im allgemeinen diejenigen Verbindungen der Formel I, worin eine der Gruppen X¹ oder X² eine Estergruppe ―COO― oder ―OOC― und die übrigen der Gruppen X¹, X², X³ und X⁴ eine einfache Kovalenzbindung bedeuten. Ferner sind diejenigen Verbindungen der Formel I bevorzugt, worin mindestens einer der beiden direkt an die Estergruppe X¹ bzw. X² gebundenen Ringe (vorzugsweise der an das Sauerstoffatom der Estergruppe gebundene Ring) eine Gruppe der Formel II bedeutet ; dies gilt insbesondere für die tetracyclischen Verbindungen. Weiterhin sind grundsätzlich diejenigen Verbindungen der Formel bevorzugt, worin n für die Zahl 1 steht. Ferner bedeutet vorzugsweise X² eine Estergruppe, falls n für die Zahl 1 steht.

Besonders geeignete Verbindungen der Formel I sind somit diejenigen, worin eine der Gruppen X¹ oder X² eine Estergruppe ―OO― oder ―OOC― und die übrigen der Gruppen X¹, X², X³ und X⁴ eine einfache Kovalenzbindung bedeuten ; die Ringe A¹ und A⁵ 1,4-Phenylen oder trans-1,4-Cyclohexylen bezeichnen; die Ringe A², A³ und A⁴ 1,4-Phenylen oder, sofern sie nicht mit mindestens einem der beiden andern dieser Ringe durch eine einfache Kovalenzbindung verknüpft sind, auch trans-1,4-Cyclohexylen darstellen ; und mindestens einer der vorhandenen Ringe 1,4-Phenylen (vorzugsweise einer der an die Estergruppe gebundenen Ringe) und mindestens einer der vorhandenen Ringe trans-1,4-Cyclohexylen bezeichnet. Vorzugsweise steht ferner n für die Zahl 1 und/oder X2 für eine Estergruppe -COO- oder -OOC-.

Bevorzugte Reste R¹ und R² sind die geradkettigen Alkylgruppen mit 1 bis 7 Kohlenstoffatomen. Weiterhin sind diejenigen Verbindungen der Formel bevorzugt, worin die Summe der Kohlenstoffatome in den Resten R¹ und R² 5 bis 10 beträgt.

Die erfindungsgemässen Monoester umfassen unter anderem die Verbindungen der folgenden allgemeinen Formeln 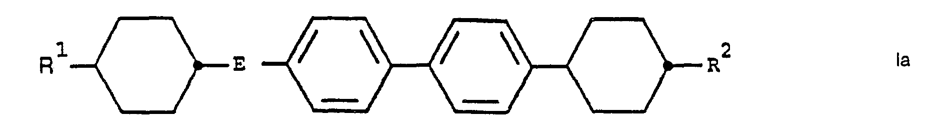 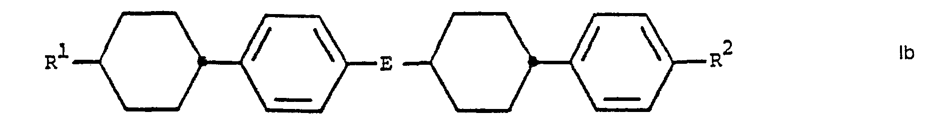 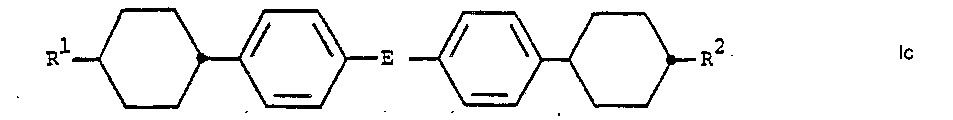 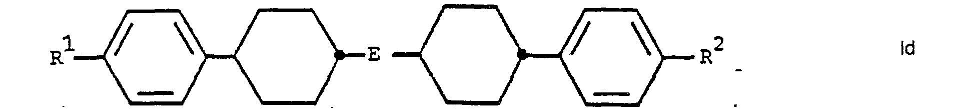 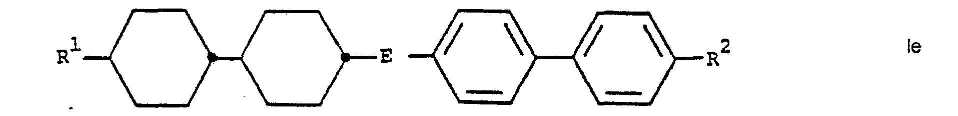 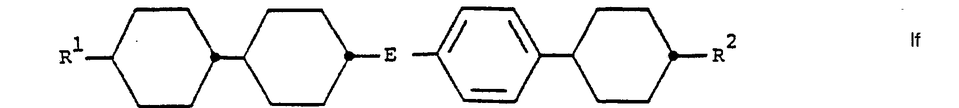 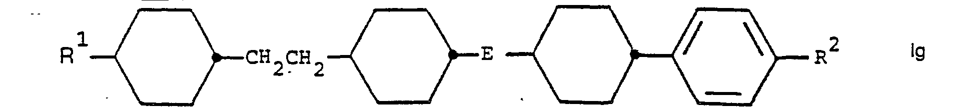 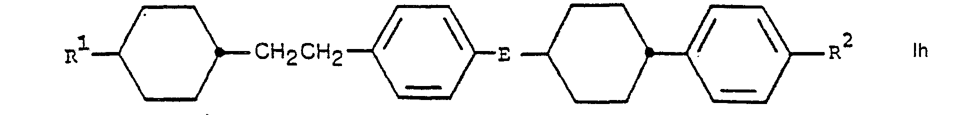 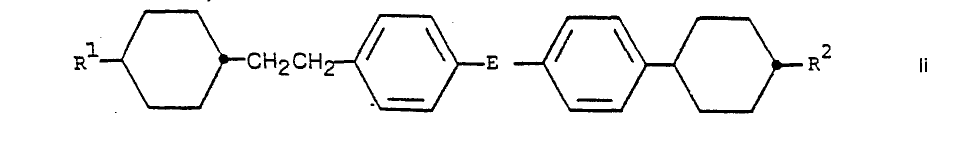 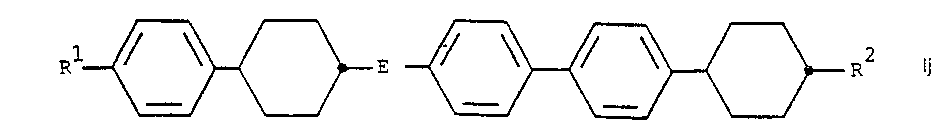 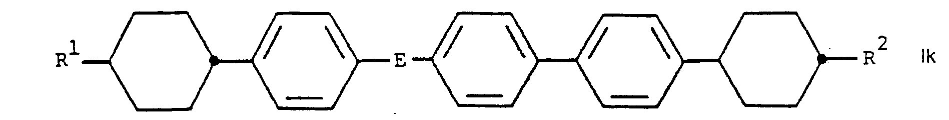 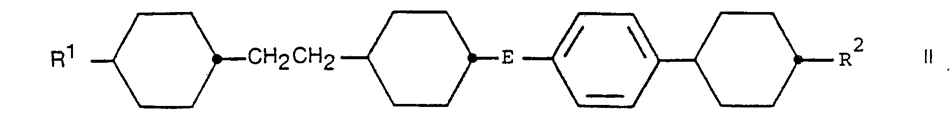 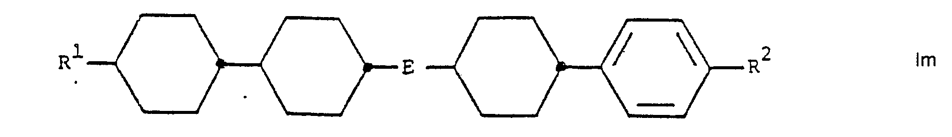 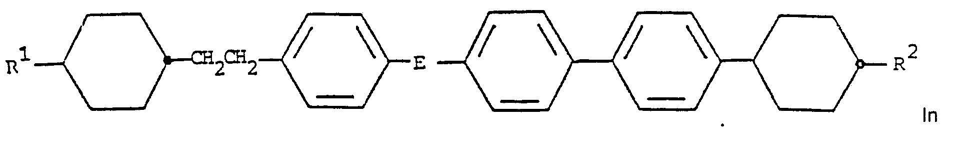 worin R¹ und R² die obigen Bedeutungen haben und E eine Estergruppe -COO- oder -OOCbezeichnet.

Beispiele bevorzugter erfindungsgemässer Verbindungen sind die Verbindungen der obigen Formeln la-In, worin R¹, R² und E jeweils die in Tabelle 1 gegebenen Bedeutungen haben, sowie die weiteren in den Synthesebeispielen genannten Verbindungen der Formel I.

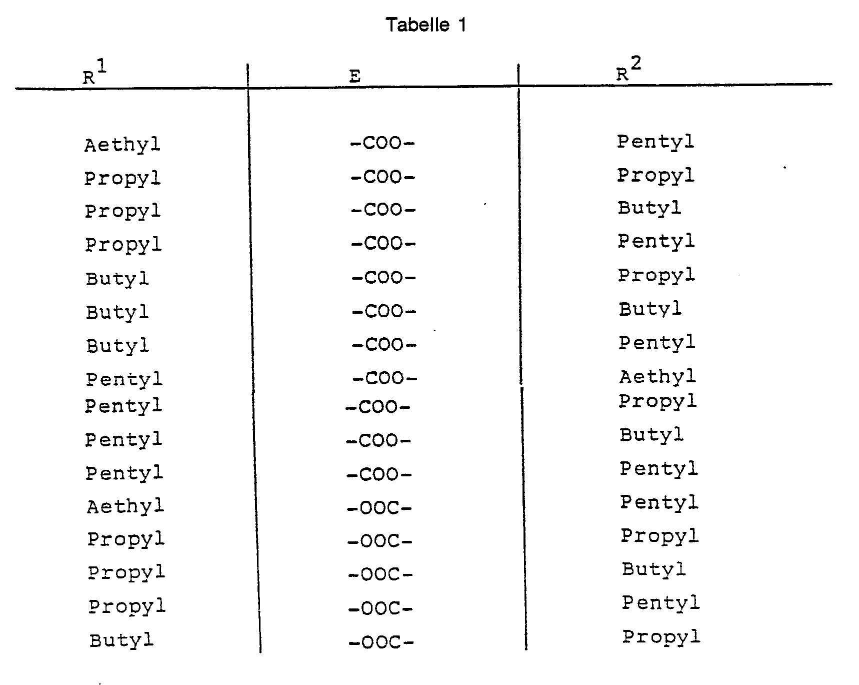

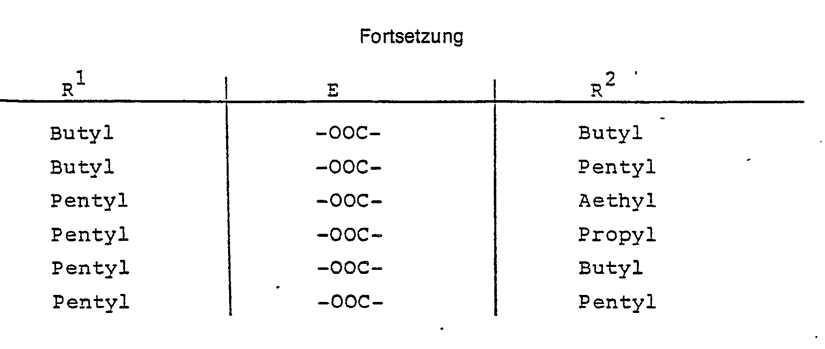

Vorzugsweise steht E für -OOC- in den obigen Formeln Ib, Ih, li, Ik, Im und In und für―COO― in den obigen Formeln la, Ic-Ig und li-In. Besonders bevorzugte Beispiele sind die Verbindungen der Formeln la, Ic, If, Ij, Im, In und insbesondere diejenigen der Formel Ik.

Die Verbindungen der Formel I können erfindungsgemäss dadurch hergestellt werden, dass man
a) zur Herstellung der Verbindungen der Formel l, worin X¹ eine Estergruppe―COO―oder―OOC― bedeutet, eine Verbindung der allgemeinen Formel 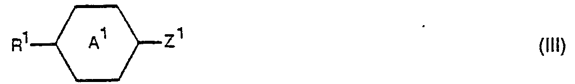 und eine Verbindung der allgemeinen Formel 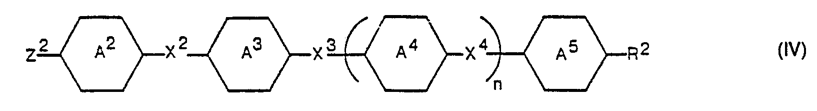 worin eine der Gruppen Z¹ und Z² die Carboxylgruppe und die andere die Hydroxygruppe bezeichnet und A¹, A², ⁻A³, A⁵, R¹, R², X², X³, X⁴ und n die oben gegebenen Bedeutungen haben, oder reaktionsfähige Derivate dieser Verbindungen verestert, oder
b) zur Herstellung der Verbindungen der Formel l, worin X² eine Estergruppe―COO―oder―OOC― bedeutet, eine Verbindung der allgemeinen Formel 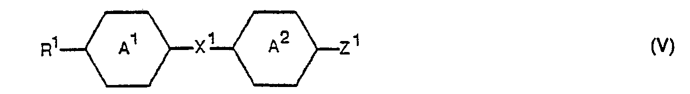 und eine Verbindung der allgemeinen Formel 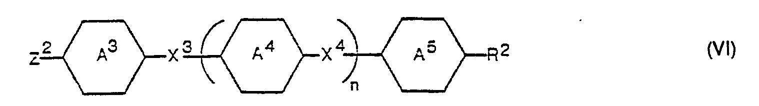 worin eine der Gruppen Z¹ und Z² die Carboxylgruppe und die andere die Hydroxygruppe bezeichnet und A¹, A², A³, A⁴, A⁵, R¹, R², X¹, X³, X⁴ und n die oben gegebenen Bedeutungen haben, oder reaktionsfähige Derivate dieser Verbindungen verestert.

Diese Umsetzungen können in an sich bekannter Weise durch Veresterung der Carbonsäure oder eines reaktions-fähigen Derivates (z. B. Säurechlorid, -bromid oder -anhydrid) mit der entsprechenden Hydroxyverbindung oder eines geeigneten Salzes (z. B. des Natriumsalzes) durchgeführt werden. Eine bevorzugte Methode ist die Umsetzung des Säurechlorids (welches aus der Carbonsäure z. B. durch Erhitzen mit Thionylchlorid erhältlich ist) mit der Hydroxyverbindung. Diese Umsetzung wird zweckmässig in einem inerten organischen Lösungsmittels, beispielsweise einem Aether (wie Diäthyläther oder Tetrahydrofuran) oder Dimethylformamid, Benzol, Toluol Cyclohexan, Tetrachlorkohlenstoff und dergleichen durchgeführt. Um den bei der Reaktion frei werdenden Chlorwasserstoff zu binden, benützt man zweckmässig ein Säurebindemittel, beispielsweise ein tertiäres Amin, Pyridin und dergleichen. Das Säurebindemittel kann auch gleichzeitig als Lösungsmittel dienen. Weitere bevorzugte Methoden sind die Umsetzung der Carbonsäure mit der Hydroxyverbindung in Gegenwart von 4-(Dimethylamino)-pyridin und N,N'-Dicyclohexylcarbodiimid oder in Gegenwart von Oxalylchlorid und Dimethylformamid [P. A. Stadler, Helv. Chim. Acta 61, 1675 (1978)]. Temperatur und Druck der obigen Veresterungsreaktionen sind nicht kritisch und im allgemeinen werden Atmosphärendruck und eine Temperatur zwischen etwa -30 °C und der Siedetemperatur des Reaktions-gemisches angewendet.

Die Verbindungen der Formeln III-VI sind bekannte oder Analoge bekannter Verbindungen und können nach bekannten Methoden hergestellt werden.

Beispielsweise können die Verbindungen der Formel IV, worin Z² Carboxyl, A² p-Phenylen und X² die Aethylengruppe bedeuten, und die Verbindungen der Formel V, worin Z' Carboxyl, A² p-Phenylen und X' die Aethylengruppe bedeuten, und die Verbindungen der Formel VI, worin Z² Carboxyl, A³ p-Phenylen und X³ die Aethylengruppe bedeuten, auch dadurch erhalten werden, dass man p-Formylbenzoesäuremethylester in einer Wittig-Reaktion mit dem entsprechenden Phosphoniumsalz umsetzt, dann die Doppelbindung katalytisch hydriert (z. B. in Gegenwart von Palladium als Katalysator) und den erhaltenen Ester verseift. Nach der gleichen Methode können auch die entsprechenden Hydroxyverbindungen erhalten werden, wenn als Ausgangsmaterial p-Acetoxybenzaldehyd verwendet wird.

Die Verbindungen der Formel IV, worin A² trans-1,4-Cyclohexylen und X² die Aethylengruppe bedeuten, und die Verbindungen der Formel V, worin A² trans-1,4-Cyclohexylen und X' die Aethylengruppe bedeuten, und die Verbindungen der Formel VI, worin A³ trans-1,4-Cyclohexylen und X³ die Aethylengruppe bedeuten, können beispielsweise auch dadurch hergestellt werden, dass man 4-Cyanocyclohexancarboxaldehyd in einer Wittig-Reaktion mit dem entsprechenden Phosphoniumsalz umsetzt und dann die Doppelbindung katalytisch hydriert. Die erhaltene Cyanoverbindung kann dann entweder durch Verseifen in die Carbonsäure übergeführt werden oder durch Umsetzung mit Methyllithium, Methylmagnesiumbromid und dergleichen, anschliessende Baeyer-Villiger-Oxidation (z. B. mit m-Chlorperbenzoesäure) und Verseifen des erhaltenen Esters in die entsprechende Hydroxyverbindung übergeführt werden.

In analoger Weise zu den obigen Reaktionen können auch diejenigen Verbindungen der Formeln IV und VI erhalten werden, welche eine Aethylengruppe und zwei oder drei Ringe zwischen der Aethylengruppe und der Carboxyl- bzw. Hydroxygruppe aufweisen.

Die Verbindungen der Formel I können in Form von Gemischen mit anderen geeigneten flüssigkristallinen oder nicht-flüssigkristallinen Substanzen verwendet werden, wie z. B. mit Substanzen aus den Klassen der Schiffschen Basen, Azo- oder Azoxybenzole, Phenylbenzoate, Cyclohexancarbonsäurephenylester und -cyclohexylester, Bi- und Terphenyle, Phenylcyclohexane, Cyclohexylbiphenyle, Zimtsäurederivate, Phenyl- und Diphenylpyrimidine, Cyclohexylphenylpyrimidine, Phenyldioxane, 2-Cyclohexyl-1-phenyläthane und dergleichen. Derartige Substanzen sind dem Fachmann bekannt und viele davon sind zudem im Handel erhältlich.

Die erfindungsgemässen Flüssigkristallmischungen enthalten, zusätzlich zu einer oder mehreren Verbindungen der Formel I, vorzugsweise eine oder mehrere der folgenden Verbindungen :
4-Cyanobiphenyle der allgemeinen Formel 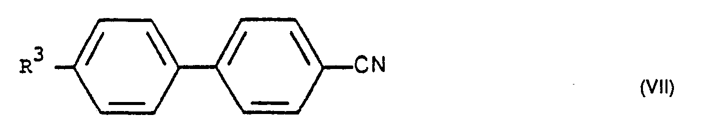 worin R³ eine geradkettige Alkyl- oder Alkoxygruppe mit 2 bis 7 Kohlenstoffatomen bedeutet,
p-(trans-4-Alkylcyclohexyl)benzonitrile der allgemeinen Formel 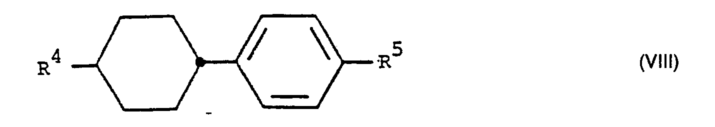 worin R⁴ eine geradkettige Alkylgruppe mit 2 bis 7 Kohlenstoffatomen und R⁵ Cyano oder eine geradkettige Alkylgruppe mit 1 bis 7 Kohlenstoffatomen bedeuten,
p-(5-Alkyl-2-pyrimidinyl)benzonitrile der allgemeinen Formel 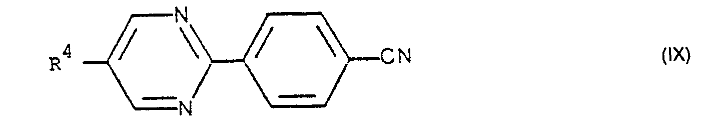 worin R⁴ die obige Bedeutung hat,
p-[5-(trans-4-Alkylcyclohexyl)-2-pyrimidinyl]benzonitrile der allgemeinen Formel 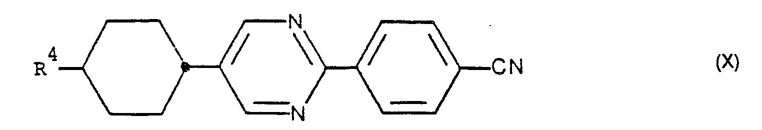 worin R⁴ die obige Bedeutung hat,
p-(trans-5-Alkyl-m-dioxan-2-yl)benzonitrile der allgemeinen Formel 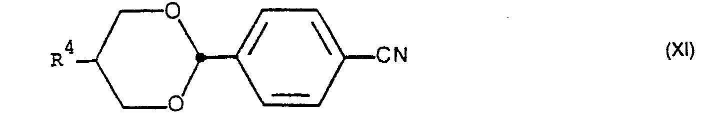 worin R⁴ die obige Bedeutung hat,
p-Alkylbenzoesäure-phenylester der allgemeinen Formel 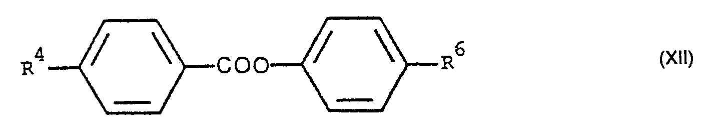 worin R⁶ die Cyanogruppe oder eine geradkettige Alkoxygruppe mit 1 bis 6 Kohlenstoffatomen bezeichnet und R⁴ die obige Bedeutung hat,
trans-4-Alkylcyclohexancarbonsäure-phenylester der allgemeinen Formel 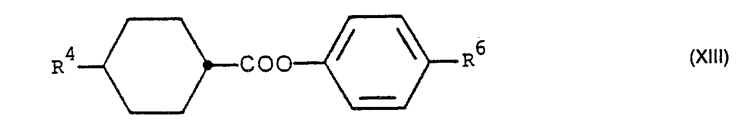 worin R4 und R⁶ die obigen Bedeutungen haben,
2-(trans-4-Alkylcyclohexyl)-1-phenyläthane der allgemeinen Formel 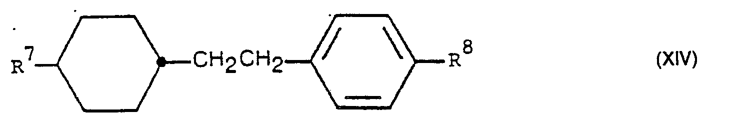 worin R⁷ eine geradkettige Alkylgruppe mit 3 bis 7 Kohlenstoffatomen und R⁸ die Cyanogruppe oder eine geradkettige Alkyl- oder Alkoxygruppe mit 1 bis 7 Kohlenstoffatomen bedeuten,
4"-Alkyl-4-cyano-p-terphenyle der allgemeinen Formel 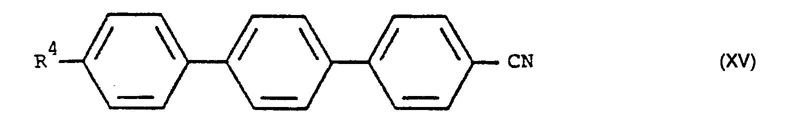 worin R⁴ die obige Bedeutung hat, oder
4'-(trans-4-Alkyfcyclohexyl)-4-cyanobiphenyle der allgemeinen Formel 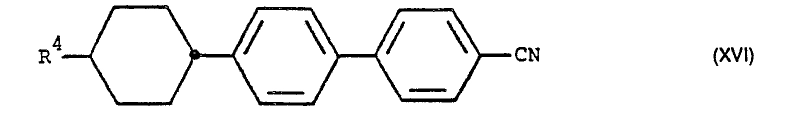 worin R⁴ die obige Bedeutung hat.

Die erfindungsgemässen Mischungen können eine oder mehrere Verbindungen der Formel I enthalten. Bevorzugt sind Mischungen, welche eine oder mehrere Verbindungen der Formel I in einer Menge von etwa 1 bis etwa 40 Gew.-% und eine oder mehrere weitere geeignete flüssigkristalline und/oder nicht flüssigkristalline Substanzen enthalten. Besonders bevorzugt sind Mischungen, welche etwa 3 bis etwa 20 Gew.-% an Verbindungen der Formel I enthalten.

Die erfindungsgemässen Mischungen können ferner geeignete optisch aktive Verbindungen, beispielsweise optisch aktive Biphenyle, und/oder dichroitische Farbstoffe, beispielsweise Azo-, Azoxy-und Anthrachinon-Farbstoffe, enthalten. Der Anteil solcher Verbindungen wird durch die Löslichkeit und die gewünschte Ganghöhe (pitch), Farbe, Extinktion und dergleichen bestimmt. Vorzugsweise beträgt der Anteil optisch aktiver Verbindungen höchstens etwa 4 Gew.-% und der Anteil dichroitischer Farbstoffe höchstens etwa 10 Gew.-%.

Die Herstellung der flüssigkristallinen Mischungen und der elektro-optischen Vorrichtungen kann in an sich bekannter Weise erfolgen und braucht daher nicht näher beschrieben zu werden.

Die Verwendung der erfindungsgemässen Verbindungen für oder als flüssigkristalline stationäre Phasen in der Gaschromatographie kann in an sich bekannter Weise und auf üblichen Trägermaterialien erfolgen. Besonders geeignet sind die erfindungsgemässen Verbindungen zur Trennung von lsomerengemischen, welche mit konventionellen stationären Phasen nicht oder nur schlecht trennbar sind, wie beispielsweise cis/trans-isomere 1,4-disubstituierte Cyclohexane, isomere aromatische Kohlenwasserstoffe (z. B. Xylole, Phenanthren/Anthracen), Doppelbindungsisomere (z. B. ungesättigte Fettsäureester) und dergleichen.

Die Erfindung betrifft ferner alle neuen Verbindungen, Mischungen, Verfahren, Verwendungen und Vorrichtungen wie hierin beschrieben.

Beispiele bevorzugter erfindungsgemässer Mischungen für elektro-optische Anwendungen sind die folgenden Mischungen 1-4. Δε bezeichnet die dielektrische Anisotropie, V₁₀ bzw. V₅₀ die Schwellenspannung für 10 % bzw. 50 % Transmission (gemessen in einer Drehzelle mit 8 µm Plattenabstand und 0° Kippwinkel), tₒₙ bzw. t_{off} die Einschaltzeit (0-50 % Transmission) bzw. die Abschaltzeit (100%-10% Transmission), η die Viskosität (bulk viscosity), Nₘₐₓ die maximale Zahl mutiplexierbarer Linien und Δn die optische Anisotropie.

### Mischung 1

6,55 Gew.-% 4'-Aethyl-4-cyanobiphenyl,
3,64 Gew.-% 4'-Propyl-4-cyanobiphenyl,
5,83 Gew.-% 4'-Butyl-4-cyanobiphenyl,
18,94 Gew.-% 4'-Pentyl-4-cyanobiphenyl,
4,37 Gew.-% 4"-Pentyl-4-cyano-p-terphenyl,
4,37 Gew.-% 4'-(trans-4-Pentylcyclohexyl)-4-cyanobiphenyl,
3,92 Gew.-% 1-(trans-4-Pentylcyclohexyl)-4-propylbenzol,
7,29 Gew.-% trans-4-Butylcyclohexancarbonsäure-p-äthoxyphenylester,
7,29 Gew.-% trans-4-Pentylcyclohexancarbonsäure-p-methoxyphenylester,
14,56 Gew.-% 2-(trans-4-Pentylcyclohexyl)-1-(p-äthoxyphenyl)äthan,
5,59 Gew.-% 1-[2-(trans-4-Butylcyclohexyl)äthyl]-4-(trans-4-pentylcyclohexyl)benzol,
5,49 Gew.-% 4-[2-(trans-4-Butylcyclohexyl)äthyl]-4'-(trans-4-pentylcyclohexyl)biphenyl,
7,84 Gew.-% 4-[2-(trans-4-Butylcyclohexyl)äthyl]-4'-(trans-4-pentylcyclohexyl)-1,1'-äthylendibenzol,
4,32 Gew.-% 4'-(trans-4-Pentylcyclohexyl)-4-biphenylcarbonsäure-p-(trans-4-propylcyclohexyl)phenylester ;

Smp. < -30 °C, Klp. 98 °C, nematisch ; △ε = 7,37 ; V₁₀ = 2,55V, V₅₀ = 2,88V ; tₒₙ = 28 ms t_{off} = 48 ms ; η = 27 cP; Nₘₐₓ = 68 ; △n = 0,151.

### Mischung 2

4,49 Gew.-% 4'-Aethyl-4-cyanobiphenyl,
2,99 Gew.-% 4'-Propyl-4-cyanobiphenyl,
5,09 Gew.-% 4'-Butyl-4-cyanobiphenyl,
13,82 Gew.-% 4-(trans-4-Pentylcyclohexyl)benzonitril,
4,40 Gew.-% 4"-Pentyl-4-cyano-p-terphenyl,
4,49 Gew.-% 4'(trans-4-Pentylcyclohexyl)-4-cyanobiphenyl,
7,41 Gew.-% trans-4-Butylcyclohexancarbonsäure-p-äthoxyphenylester,
6,59 Gew.-% trans-4-Pentylcyclohexancarbonsäure-p-methoxyphenylester,
3,10 Gew.-% 2-(trans-4-Propylcyclohexyl)-1-(p-äthylphenyl)- äthan,
19,65 Gew.-% 2-(trans-4-Pentylcyclohexyl)-1-(p-äthoxyphenyl)äthan,
8,59 Gew.-% 1-[2-(trans-4-Butylcyclohexyl]äthyl]-4-(trans-4-pentylcyclohexyl)benzol,
5,43 Gew.-% 4-[2-(trans-4-Butylcyclohexyl)äthyl]-4'-(trans-4-pentylcyclohexyl)biphenyl,
9,30 Gew.-% 4-[2-(trans-4-Butylcyclohexyl)äthyl]-4'-(trans-4-pentylcyclohexyl)-1,1'-äthylendibenzol,
4,65 Gew.-% 4'-(trans-4-Pentylcyclohexyl)-4-biphenylcarbonsäure-trans-4-(p-propylphenyl)cyclohexylester ;

Smp. <―30 °C, Klp. 100 °C, nematisch ; Δε = 6,46 ; V₁₀ = 2,61V ; V₅₀ = 2,93V ;tₒₙ = 31 ms, t_{off} = 42 ms ; η = 27 cP ; Nmax = 73 ; △n=0,131.

### Mischung 3

4,49 Gew.-% 4'-Aethyl-4-cyanobiphenyl,
2,99 Gew.-% 4'-Propyl-4-cyanobiphenyl,
5,09 Gew.-% 4'-Butyl-4-cyanobiphenyl,
13,82 Gew.-% 4-(trans-4-Pentylcyclohexyl)benzonitril,
8,89 Gew.-% 4'-(trans-4-Pentylcyclohexyl)-4-cyanobiphenyl,
7,41 Gew.-% trans-4-Butylcyclohexancarbonsäure-p-äthoxyphenylester,
6,59 Gew.-% trans-4-Pentylcyclohexancarbonsäure-p-methoxyphenylester,
3,10 Gew.-% 2-(trans-4-Propylcyclohexyl)-1-(p-äthylphenyl)-äthan,
19,65 Gew: % 2-(trans-4-Pentylcyclohexyl)-1-(p-äthoxyphenyl)äthan,
8,59 Gew.-% 1-[2-(trans-4-Butylcyclohexyl)äthyl]-4-(trans-4-pentylcycl)benzol,
5,43 Gew.-% 4-[2-(trans-4-Butylcyclohexyl)äthyl]-4'-(trans-4-pentylcyclohexyl)biphenyl,
9,30 Gew.-% 4-[2-(trans-4-Butylcyclohexyl)äthyl]-4'-(trans-4-pentylcyclohexyl)-1,1'-äthylendibenzol,
4,65 Gew.-% 4'-(trans-4-Pentylcyclohexyl)-4-biphenylcarbonsäure-trans-4-(p-propylphenyl)cyclohexylester ;
Smp. <―30°C, Klp. 98 °C, nematisch.

### Mischung 4 .

4,49 Gew.-% 4'-Aethyl-4-cyanobiphenyl,
2,99 Gew.-% 4'-Propyl-4-cyanobiphenyl,
5,09 Gew.-% 4'-Butyl-4-cyanobiphenyl,
13,82 Gew.-% 4-(trans-4-Pentylcyclohexyl) benzonitril,
4,40 Gew.-% 4"-Pentyl-4-cyano-p-terphenyl,
4,49 Gew.-% 4'-(trans-4-Pentylcyclohexyl)-4-cyanobiphenyl,
3,10 Gew.-% 1-(trans-4-Aethylcyclohexyl)-4-propylbenzol,
7,41 Gew.-% trans-4-Butylcyclohexancarbonsäure-p-äthoxyphenylester,
6,59 Gew.-% trans-4-Pentylcyclohexancarbonsäure-p-methoxyphenylester,
19,65 Gew.-% 2-(trans-4-Pentylcyclohexyl)-1-(p-äthoxyphenyl)äthan,
8,59 Gew.-% 1-[2-(trans-4-Butylcyclohexyl)äthyl]-4-(trans-4-pentylcyclohexyl)benzol,
5,43 Gew.-% 4-[2-(trans-4-Butylcyclohexyl)äthyl]-4-(trans-4-pentylcyclohexyl)biphenyl,
9,30 Gew.-% 4-[2-(trans-4-Butylcyclohexyl)äthyl]-4'-(trans-4-pentylcyclohexyl)-1,1'-äthylendibenzo(,
4,65 Gew.-% 4'-(trans-4-Peniylcyclohexyl)-4-biphenylcarbonsäure-p-(trans-4-propylcyclohexyl) phenyl-ester ;
Smp. <―30°C. Klp. 100 °C, nematisch.

Die Herstellung der erfindungsgemässen Verbindungen, die Herstellung einiger Ausgangsmaterialien und die Verwendung der erfin3wngsgemässen Verbindungen in der Chromatographie wird anhand der nachstehenden Beispiele weiter veranschaulicht. C bezeichnet eine kristallline, S eine smektische, N eine nematische und I die isotrope Phase.

### Beispiel 1

1,40 g 4'-(trans-4-Pentylcyclohexyl)-4-biphenylcarbonsäure wurden mit 0,82 g Thionylchlorid in 25 ml Benzol 3 Stunden zum Sieden erhitzt. Lösungsmittel und überschüssiges Thionylchlorid wurden abdestilliert und der Rückstand noch zweimal in je 25 ml Toluol aufgenommen und eingeengt.

Das erhaltene rohe 4'-(trans-4-Pentylcyclohexyl)-4-biphenylcarbonsäurechlorid wurde in 40 ml Benzol gelöst und dann zu einer Lösung von 0,90 g trans-4-(p-Propylphenyl)-cyclohexanol in 20 ml Pyridin zugetropft. Das Reaktionsgemisch wurde über Nacht bei einer Badtemperatur von 65 °C gerührt, dann auf Eiswasser gegossen und mit Diäthyläther extrahiert. Der Extrakt wurde viermal mit je 25 ml 3N Salzsäure gewaschen, dann mit 25 ml 2N Natriumcarbonatlösung und mehrmals mit Wasser gewaschen, über Natriumsulfat getrocknet und eingeengt. Der erhaltene rohe 4'-(trans-4-Pentylcyclohexyl)-4-biphe- nylcarbonsäure-trans-4-(p-propylphenyl)cyclohexylester wurde einmal aus Aethanol und wenig Aethylacetat und einmal aus Aethylacetat umkristallisiert. Ausbeute 1,1 g ; Smp. (C-S) 131,2 °C ; Phasenübergang (S-N) 143, 3 °C ; Klp. (N-I) 337,5 °C.

In analoger Weise wurden folgende Verbindungen hergestellt :
p-(trans-4-Pentylcyclohexyl) benzoesäure-trans-4-(p-propylphenyl) cyclohexylester: Smp. (C-S) 116,1 °C, Phasenübergang S-N 118,8 °C, Klp. (N-I) 262,7 °C.
p-(trans-4-Pentylcyclohexyl)benzoesäure-p-(trans-4-propylcyclohexyl)phenylester ; Phasenübergang C-C 92,5°C, Smp. (C-S) 135,6 °C, Phasenübergang S-N 142,5°C, Klp. (N-I) 310 °C.
p-[2-(trans-4-Pentylcyclohexyl) äthyl]benzoesäure-trans-4-(p-propylphenyl) cyclohexylester; Smp. (C-S) 110 °C, Phasenübergang S-N 118 °C, Klp. (N-I) 213,5 °C.
p-[2-(trans-4-Pentylcyclohexyl) äthyl] benzoesäure-p-(trans-4-propylcyclohexyl) phenylester ; Smp. (C-S) 117,3 °C, Phasenübergang S-N 133 °C, Klp. (N-I) 262,5 °C.
4'-(trans-4-Pentylcyclohexyl)-4-biphenylcarbonsäuretrans-4-(p-butylphenyl) cyclohexylester ; Smp. (C-S) 107,0 °C bzw. 112,7 °C bzw. 117,6 °C (3 Modifikationen), Phasenübergang S-N 149,1 °C, Klp. (N-I) 333 °C.

In analoger Weise können ferner alle in Beispiel 2 und 5 genannten Verbindungen der Formel I hergestellt werden.·

### Beispiel 2

0,40 g 4-Hydroxy-4'-(trans-4-Pentylcyclohexyl) biphenyl, 0,21 g trans-4-Propylcyclohexancarbonsäu- re und 0,025 g (4-Dimethylamino) pyridin wurden in 25 ml Dichlormethan gelöst und dann innert 10 Minuten unter Rühren portionenweise 0,31 g N,N'-Dicyclohexylcarbodiimid zugegeben. Das Gemisch wurde 3 Tage bei Raumtemperatur stehengelassen und dann von Niederschlag abfiltriert. Das Filtrat wurde mit Dichlormethan verdünnt, zweimal mit je 20 ml gesättigter Natriumbicarbonatlösung und dann mit Wasser gewaschen, über Natriumsulfat getrocknet und eingeengt. Der erhaltene, rohe trans-4-Propylcyclohexancarbonsäure-4'-(trans-4-pentylcyclohexyl)-4-biphenylylester wurde an Kieselgel mit Hexan/Dioxan (Volumenverhältnis 19:1) chromatographiert. Die gemäss Dünnschichtchromatographie reinen Fraktionen wurden gesammelt und aus Aethylacetat umkristallisiert. Ausbeute 0,33 g ; Smp. (C-S) 92 °C, Klp. (N-I) 319 °C ; weitere Phasenübergänge : S-S 154 °C, S-S 218,5°C, S-N 240 °C.

In analoger Weise wurden folgende Verbindungen hergestellt:
trans-4-(p-Pentylphenyl) cyclohexancarbonsäure-trans-4-(p-propylphenyl) cyclohexylester ; Smp. (C-S) 66,5 °C, Phasenübergang S-N 183°C Klp. (N-I) 234,5 °C.
trans-4-[2-(trans-4-Pentylcyclohexyl) äthyl] cyclohexancarbonsäure-trans-4-(p-propylphenyl) cyclohexylester ; Smp. (C-S) 65,4 °C, Phasenübergang S-N 228,4 °C, Klp. (N-I) 245,1 °C.
4'-(trans-4-Pentylcyclohexyl)-4-biphenylcarbonsäure-trans-4-propylcyclohexylester ; Smp. (C-S) 111,8 °C, Phasenübergang S-N 118 °C, Klp. (N-I) 282,5 °C.
4'-(trans-4-Pentylcyclohexyl)-4-biphenylcarbonsäure-p-(trans-4-propylcyclohexyl) phenylester ; Smp. (C-S) 153,9°C, Phasenübergang S-N 195,0 °C, Klp. (N-I) 419 °C.
4'-(trans-4-Pentylcyclohexyl)-4-biphenylcarbonsäure-p-(trans-4-butylcyclohexyl) phenylester ; Smp. (C-S) 140°C, Phasenübergang S-N 201 °C, Klp. (N-I) 413 °C.
4'-(trans-4-Pentylcyclohexyl)-4-biphenylcarbonsäure-p-[2-(trans-4-butylcyclohexyl) äthyl] phenylester ; Smp. (C-S) 139 °C bzw. 145 °C (2 Modifikationen), Phasenübergang S-N 189,5 °C, Klp. (N-I) 358,5 °C.

In analoger Weise können ferner alle in Beispiel 1 und 5 genannten Verbindungen der Formel I hergestellt werden.

### Beispiel 3

In einem Sulfierkolben mit Thermometer und Festsubstanzzugaberohr wurde unter Argonbegasung ein Gemisch von 2,51 g p-Pentylbenzyl-triphenylphosphoniumbromid und 615 mg eines cis/trans-Gemisches (ca. 1 : 1) von 4-Cyanocyclohexancarboxaldehyd in 30 mi t-Butylmethyläther bei 0°C vorgelegt, innert 2 Minuten mit 673 mg festem Kalium-t-butylat versetzt und anschliessend noch 1,5 Stunden bei 0°C gerührt. Dann wurde das rotbraune, heterogene Reaktionsgemisch auf 100 ml Wasser gegossen und dreimal mit je 100 ml Diäthyläther extrahiert. Die organischen Phasen wurden noch zweimal mit je 50 ml Wasser und einmal mit 50 ml gesättigter Kochsalzlösung gewaschen, über Magnesiumsulfat getrocknet und eingeengt. Der Rückstand wurde in 150 ml Hexan aufgeschlämmt, durch Filtration vom ausgefallenen Triphenylphosphinoxid befreit (Nachwaschen mit Hexan) und das Filtrat eingeengt. Niederdruckchromatographie (0,4 bar) des resultierenden Oeles (1,36 g) an Kieselgel mit 3 % Essigester/Petroläther als Laufmittel ergab 1,02 g (81 %) 4-[2-(p-Pentylphenyl) äthenyl] cyclohexancarbonitril als farbloses Oel ; Rf-Werte (10 % Essigester/Petroläther) : 0,27 und 0,37 (Stereoisomerengemisch).

956 mg des erhaltenen 4-[2-(p-Pentylphenyl) äthenyl]-cyclohexancarbonitrils wurden in einem Sulfierkolben in 50 ml Toluol gelöst, mit 150 mg 10 % Palladium/Kohle versetzt und bei Normaldruck und Raumtemperatur bis zum Stillstand der Wasserstoffaufnahme hydriert (ca. 30 Minuten). Filtration des Reaktionsgemisches (Nachwaschen mit Toluol), Einengen des Filtrats und Niederdruckchromatographie (0,4 bar) des Rückstandes (890 mg) an Kieselgel mit 5 % Essigester/Petroläther als Laufmittel ergab 788 mg (82 %) 4-[2-(p-Pentylphenyl) äthyl] cyclohexancarbonitril (cis/trans-Verhältnis ca. 1 : 3 gemäss Gaschromatographie und NMR-Spektroskopie). Zweimalige Kristallisation aus Pentan bei -20 °C lieferte schliesslich das trans-Nitril (trans-Gehalt 98,8 %) ; Smp. (C-I) 22,4 °C, Klp. (N-I) ―14,1 °C, Rf-Wert (5.% Essigester/Petroläther) 0,22.

Das erhaltene trans-4-[2-(p-Pentylphenyl) äthyl] cyclohexancarbonitril kann in analoger Weise zu Beispiel 4 in die trans-4-[2-(p-Pentylphenyl) äthyl] cyclohexancarbonsäure übergeführt werden.

### Beispiel 4

In einem Rundkolben mit Rückflusskühler wurde ein Gemisch von 3,60 g trans-4-[2-(trans-4-Pentylcyclohexyl)-äthyl] cyclohexancarbonitril und 5,0 g Kaliumhydroxid in 50 ml Diäthylenglykol während 22 Stunden auf 180 °C erhitzt. Nach dem Abkühlen wurde das braune Reaktionsgemisch mit ca. 100 ml 2N Salzsäure sauer gestellt und dreimal mit je 150 ml Diäthyläther extrahiert. Die organischen Phasen wurden noch dreimal mit je 100 ml Wasser gewaschen, über Magnesiumsulfat getrocknet und eingeengt. Anschliessende Kristallisation des Rückstandes (3,74 g ; cis/trans-Verhältnis ca. 1 : 3) aus 100 ml Hexan ergab 2,12 g (55 %) reine trans-4-[2-(trans-4-Pentylcyclohexyl) äthyl] cyclohexancarbonsäure ; Smp. 143,0°C, Klp. 209,9 °C.

### Beispiel 5

In einem Sulfierkolben mit mechanischem Rührer, Serumkappe, Thermometer und Tropftrichter wurde unter Argonbegasung eine Lösung von 0,902 ml Dimethylformamid in 20 ml Acetonitril bei ―20°C vorgelegt und innert Minuten mit 0,338 ml Oxalylchlorid versetzt. Nach beendeter Zugabe wurde noch 20 Minuten bei -20 °C gerührt und dann 1,0 g trans-4-(trans-4-Pentylcyclohexyl) cyclohexancarbonsäure über ein Festsubstanzzugaberohr in die entstandene, weisse Suspension eingetragen. Anschliessend wurde das Reaktionsgemisch während 30 Minuten bei - 20°C gerührt und dann bei ―20 °C innert 10 Minuten tropfenweise mit einer Lösung von 1,97 g trans-4-(p-Propylphenyl) cyclohexanol und 0,9 ml Pyridin in 20 ml Acetonitril versetzt. Das Reaktionsgemisch wurde unter langsamer Erwärmung auf Raumtemperatur noch 15 Stunden gerührt, dann auf 200 ml kalte 2N Natriumcarbonat-Lösung gegossen und dreimal mit je 200 ml Methylenchlorid extrahiert. Die organischen Phasen wurden noch einmal mit 100 ml 2N Natriumcarbonat-Lösung und zweimal mit je 200 ml Wasser gewaschen, über Magnesiumsulfat getrocknet und eingeengt. Niederdruckchromatographie (0,5 bar) des Rückstandes (2,6 g) an 140 g Kieselgel mit Toluol/Hexan (Vol. 1 : 1) ergab 757 mg (44 %) trans-4-(trans-4-Pentylcyclohexyl) cyclohexancarbonsäure-trans-4-(p-propylphenyl) cyclohexylester als farblose Kristalle. Eine einmalige Umkristallisation aus Aceton lieferte analysenreines Produkt mit Smp. (C-S) 63,3°C, Phasenübergang S-N 241,5 °C, Klp. (N-I) 285,5 °C.

In analoger Weise wurde folgende Verbindung hergestellt :
trans-4-(trans-4-Pentylcyclohexyl) cyclohexancarbonsäure-p-(trans-4-propylcyclohexyl) phenylester ; Smp. (C-S) 44 °C, Phasenübergang S-N 241,5 °C, klp. (N-I) 310°C.

In analoger Weise können ferner alle in den Beispielen 1 und 2 genannten Verbindungen der Formel 1 hergestellt werden.

### Beispiel 6

Auf einer 3 m langen, gepackten Säule (innerer Durchmesser 2,2 mm), welche mit 2 Gew.-% 4' -(trans-4-Penlylcyclohexyl)-4-biphenylcarbonsäure-trans-4-(p-propylphenyl)-cyclohexylester auf Gas-Chrom Q® (Applied Science Labs), 120/140 mesh, gefüllt war, wurde bei einer Analysentemperatur von 160 °C ein Isomerengemisch von 4-cis/trans-Propyl-1-(4-propylphenyl) cyclohexan (cis/trans-Verhältnis ca. 1 1) getrennt. Als Trägergas diente Stickstoff (30 ml/Min.). Die Retentionszeit betrug für das cis-isomere 20 Minuten und für das trans-Isomere 39 Minuten. Die relative Retention a für das trans-Isomere betrug 2,0 (α = 1,0 für das cis-Isomere).

### Beispiel 7

Auf einer 2 m langen, gepackten Säule (innerer Durchmesser 2,2 mm), welche mit 2 Gew.-% 4'-(trans-4-Pentylcyclohexyl)-4-biphenylcarbonsäure-trans-4-propylcyclohexylester auf Gas-Chrom Q® (Applied Science Labs), 120/140 mesh, gefüllt war, wurde bei einer Analysentemperatur von 150 °C ein Isomerengemisch Oleinsäuremethylester [(Z)-Isomer] und Elaidinsäuremethylester [(E)-Isomer] getrennt (Z/E-Verhältnis ca. 3 1). Als Trägergas diente Stickstoff (30 ml/Min.). Die Retentionszeit betrug für den Oleinsäuremethylester 32 Minuten und für den Elaidinsäuremethylester etwa 35 Minuten. Die relative Retention α für den Elaidinsäuremethylester betrug 1,1 (α = 1,0 für Oleinsäuremethylester).

### Beispiel 8

Auf einer 3 m langen, gepackten Säule (innerer Durchmesser 2,2 mm), welche mit 2 Gew.-% 4'-(trans-4-Pentylcyclohexyl)-4-biphenylcarbonsäure-trans-4-(p-propylphenyl)-cyclohexylester auf Gas-Chrom Q® (Applied Science Labs), 120/140 mesh, gefüllt war, wurde bei einer Analysentemperatur von 180 °C ein Gemisch von Anthracen und Phenanthren (Isomerenverhältnis Anthracen/Phenanthren ca. 3:1) getrennt. Als Trägergas diente Stickstoff (30 ml/Min.). Die Retentionszeit betrug für Phenanthren 10 Minuten und für Anthracen 13 Minuten. Die relative Retention a für Anthracen betrug 1,3 (α = 1,0 für Phenanthren).

## Patentansprüche (Patentansprüche für folgende(n) Vertragsstaat(en) : BE)

1. Verbindungen der allgemeinen Formel 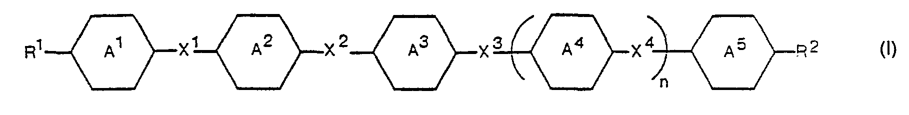 worin n für die Zahl 0 und 1 steht ; eine der Gruppen X¹ oder X² eine Estergruppe―COO―oder―OOC― und die übrigen der Gruppen X¹, X², X³ und X⁴ eine einfache Kovalenzbindung bedeuten, oder eine dieser Gruppen auch die Aethylengruppen ―CH₂CH₂― bedeutet ; die Ringe A¹ und A⁵ eine Gruppe der Formel 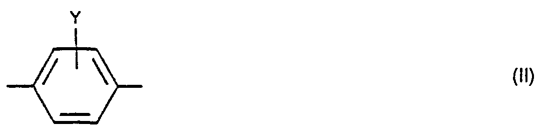 oder trans-1,4-Cyclohexylen bezeichnen ; die Ringe A², A³ und A⁴ eine Gruppe der Formel II oder, sofern sie nicht mit mindestens einem der beiden andern dieser Ringe durch eine einfache Kovalenzbindung verknüpft sind, auch trans-1,4-Cyclohexylen darstellen; mit der Massgabe, dass mindestens einer der vorhandenen Ringe eine Gruppe der Formel II bezeichnet ; Y Wasserstoff oder an einem der Ringe der Formel II, welcher nicht mit einem weiteren Ring über eine einfache Kovalenzbindung verknüpft ist, auch Fluor, Chlor oder Methyl bedeutet ; und R¹ und R² geradkettiges Alkyl mit 1 bis 7 Kohlenstoffatomen oder an einem Ring der Formel 11 auch geradkettiges Alkoxy mit 1 bis 7 Kohlenstoffatomen bezeichnen.

2. Verbindungen nach Anspruch 1, dadurch gekennzeichnet, dass Y Wasserstoff bedeutet.

3. Verbindungen nach Anspruch 1 oder 2, dadurch gekennzeichnet, dass eine der Gruppen X¹ oder X² eine Estergruppe ―COO― oder -OOC- und die übrigen der Gruppen X¹, X², X³ und X⁴ eine einfache Kovalenzbindung bedeuten oder, sofern X² eine Estergruppe bezeichnet, X¹ auch eine Aethylengruppe ―CH₂CH₂―bedeutet.

4. Verbindungen nach Anspruch 3, dadurch gekennzeichnet, dass eine der Gruppen X¹ oder X² eine Estergruppe ―COO― oder ―OOC― und die übrigen der Gruppen X¹, X², X³ und X⁴ eine einfache Kovalenzbindung bedeuten.

5. Verbindungen nach einem der Ansprüche 1 bis 4, dadurch gekennzeichnet, dass mindestens einer der vorhandenen Ringe trans-1,4-Cyclohexylen darstellt.

6. Verbindungen nach einem der Ansprüche 1 bis 5, dadurch gekennzeichnet, dass eine der Gruppen X¹ oder X² eine Estergruppe ―COO― oder ―OOC― und die übrigen der Gruppen X¹ X², X³ und X⁴ eine einfache Kovalenzbindung bedeuten ; die Ringe A¹ und A⁵ 1,4-Phenylen oder trans-1,4-Cyclohexylen bezeichnen ; die Ringe A², A³ und A⁴, 1,4-Phenylen oder, sofern sie nicht mit mindestens einem der beiden andern dieser Ringe durch eine einfache Kovalenzbindung verknüpft sind, auch trans-1,4-Cyclohexylen darstellen ; und mindestens einer der vorhandenen Ringe 1,4-Phenylen und mindestens einer der vorhandenen Ringe trans-1,4-Cyclohexylen bezeichnet.

7. Verbindungen nach einem der Ansprüche 1 bis 6, dadurch gekennzeichnet, dass n für die Zahl 1 steht.

8. Verbindungen nach Anspruch 7, dadurch gekennzeichnet, dass X² eine Estergruppe -COO-oder ―OCC― bedeutet.

9. Verbindungen nach einem der Ansprüche 1 bis 8, dadurch gekennzeichnet, dass R¹ und R² geradkettiges Alkyl mit 1 bis 7 Kohlenstoffatomen bezeichnen.

10. Verbindungen nach einem der Ansprüche 1 bis 9, dadurch gekennzeichnet, dass die Summe der Kohlenstoffatome in den Resten R¹ und R² 5 bis 10 beträgt.

11. Flüssigkristallines Gemisch enthaltend eine oder mehrere Verbindungen der in Anspruch 1 definierten Formel I und eine oder mehrere weitere geeignete flüssigkristalline und/oder nicht flüssigkristalline Substanzen.

12. Verfahren zur Herstellung der Verbindungen der in Anspruch 1 definierten Formel I, dadurch gekennzeichnet, dass man
a) zur Herstellung der Verbindungen der Formel I, worin X¹ eine Estergruppe ―COO― oder -OOC- bedeutet, eine Verbindung der allgemeinen Formel 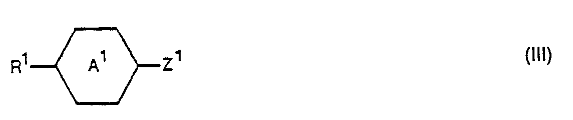 und eine Verbindung der allgemeinen Formel 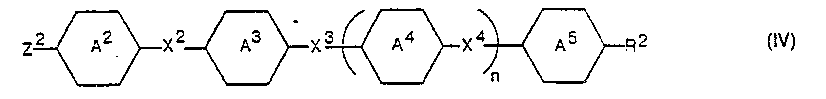 worin eine der Gruppen Z¹ und Z² die Carboxylgruppe und die andere die Hydroxygruppe bezeichnet und A¹, A², A³, A⁴, A⁵, R¹, R², X², X³, X⁴ und n die in Anspruch 1 gegebenen Bedeutungen haben, oder reaktionsfähige Derivate dieser Verbindungen verester, oder
b) zur Herstellung der Verbindungen der Formel I, worin X² eine Estergruppe ―COO― oder -OOC- bedeutet, eine Verbindung der allgemeinen Formel 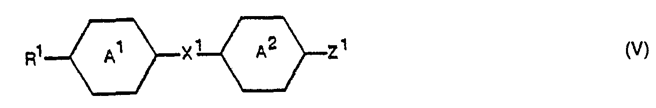 und eine Verbindung der allgemeinen Formel 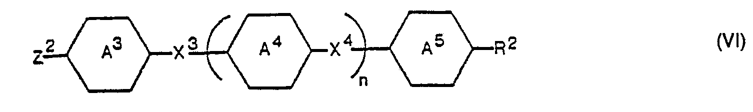 worin eine der Gruppen Z¹ und Z² die Carboxylgruppe und die andere die Hydroxygruppe bezeichnet und A¹, A², A³, A⁴, A⁵, R¹, R², X¹, X³, X⁴ und n die in Anspruch 1 gegebenen Bedeutungen haben, oder reaktionsfähige Derivate dieser Verbindungen verestert.

13. Verwendung der Verbindungen der in Anspruch 1 definierten Formel I für elektro-optische Zwecke.

14. Verwendung der Verbindungen der in Anspruch 1 definierten Formel I als flüssigkristalline stationäre Phasen in der Gaschromatographie.

## Patentansprüche (Patentansprüche für folgende(n) Vertragsstaat(en) : NL)

1. Verwendung der Verbindungen. der allgemeinen Formel 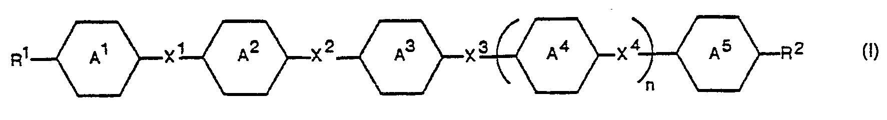 worin n für die Zahl 0 oder 1 steht ; eine der Gruppen X¹ oder X² eine Estergruppe ―COO― oder ―OOC― und die übrigen der Gruppen X¹, X², X³ und X⁴ eine einfache Kovalenzbindung bedeuten, oder eine dieser Gruppen auch die Aethylengruppe ―CH₂CH₂― bedeutet ; die Ringe A¹ und A⁵ eine Gruppe der Formel 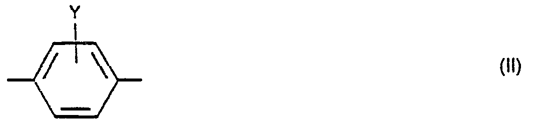 oder trans-1,4-Cyclohexylen bezeichnen ; die Ringe A², A³ und A⁴ eine Gruppe der Formel II oder, sofern sie nicht mit mindestens einem der beiden andern dieser Ringe durch eine einfache Kovalenzbindung verknüpft sind, auch trans-1,4-Cyclohexylen darstellen ; mit der Massgabe, dass mindestens einer der vorhandenen Ringe eine Gruppe der Formel II bezeichnet; Y Wasserstoff oder an einem der Ringe der Formel II, welcher nicht mit einem weiteren Ring über eine einfache Kovalenzbindung verknüpft ist, auch Fluor, Chlor oder Methyl bedeutet ; und R¹ und R² geradkettiges Alkyl mit 1 bis 7 Kohlenstoffatomen oder an einem Ring der Formel II auch geradkettiges Alkoxy mit 1 bis 7 kohlenstoffatomen bezeichnen, als flüssigkristalline stationäre Phasen in der Gaschromatographie.

2. Verbindungen der allgemeinen Formel 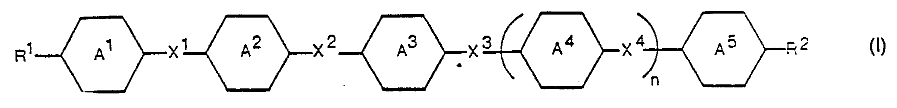 worin n für die Zahl 0 oder 1 steht ; eine der Gruppen X¹ oder X² eine Estergruppe ―COO― oder -OOC- und die übrigen der Gruppen X¹, X², X³ und X⁴ eine einfache Kovalenzbindung bedeuten, oder eine dieser Gruppen auch die Aethylengruppe -CH₂CH₂- bedeutet ; die Ringe A¹ und A⁵ eine Gruppe der Formel 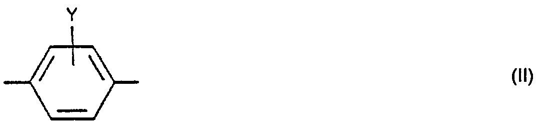 oder trans-1,4-Cyclohexylen bezeichnen ; die Ringe A², A³ und A⁴ eine Gruppe der Formel oder, sofern sie nicht mit mindestens einem der beiden andern dieser Ringe durch eine einfache Kovalenzbindung verknüpft sind, auch trans-1,4-Cyclohexylen darstellen ; mit der Massgabe, dass mindestens einer der vorhandenen Ringe eine Gruppe der Formel II bezeichnet; Y Wasserstoff oder an einem der Ringe der Formel II, welcher nicht mit einem weiteren Ring über eine einfache Kovalenzbindung verknüpft ist, auch Fluor, Chlor oder Methyl bedeutet ; und R¹ und R² geradkettiges Alkyl mit 1 bis 7 Kohlenstoffatomen oder an einem Ring der Formel II auch geradkettiges Alkoxy mit 1 bis 7 Kohlenstoffatomen bezeichnen ; mit der Massgabe, dass, wenn n für die Zahl 0 steht, X² -COO- oder -OOC- bedeutet und X' und X³ einfache Kovalenzbindungen bedeuten, nicht zugleich die Ringe A¹ und A² oder die Ringe A³ und A⁵ trans-1,4-Cyclohexylen bezeichnen.

3. Verbindungen nach Anspruch 2, dadurch gekennzeichnet, dass Y Wasserstoff bedeutet.

4. Verbindungen nach Anspruch 2 oder 3, dadurch gekennzeichnet, dass eine der Gruppen X¹ oder X² eine Estergruppe ―COO― oder ―OOC― und die übrigen der Gruppen X¹, X², X³ und X⁴ eine einfache Kovalenzbindung bedeuten oder, sofern X² eine Estergruppe bezeichnet, X¹ auch eine Aethylengruppe -CH₂CH₂- bedeutet.

5. Verbindungen nach einem der Ansprüche 2 bis 4, dadurch gekennzeichnet, dass mindestens einer der vorhandenen Ringe trans-1,4-Cyclohexylen darstellt.

6. Verbindungen nach einem der Ansprüche 2 bis 5, dadurch gekennzeichnet, dass n für die Zahl 1 steht.

7. Verbindungen nach Anspruch 6, dadurch gekennzeichnet, dass X² eine Estergruppe -COO-oder -OOC- bedeutet.

8. Flüssigkristallines Gemisch enthaltend eine oder mehrere Verbindungen der in Anspruch 2 definierten Formel I und eine oder mehrere weitere geeignete flüssigkristalline und/oder nicht flüssigkristalline Substanzen.

9. Verfahren zur Herstellung der Verbindungen der in Anspruch 2 definierten Formel I, dadurch gekennzeichnet, dass man
a) zur Herstellung der Verbindungen der Formel I, worin X¹ eine Estergruppe ―COO― oder -OOC- bedeutet, eine Verbindung der allgemeinen Formel 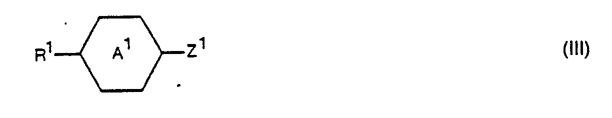 und eine Verbindung der allgemeinen Formel 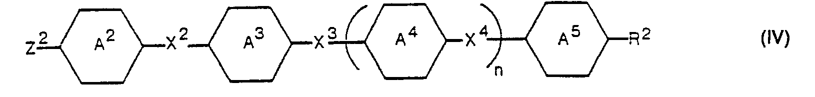 worin eine der Gruppen Z¹ und Z² die Carboxylgruppe und die andere die Hydroxygruppe bezeichnet und A¹, A², A³, A⁴, A⁵, R¹, R², X², X³, X⁴ und n die in Anspruch 2 gegebenen Bedeutungen haben, oder reaktionsfähige Derivate dieser Verbindungen verestert, oder
b) zur Herstellung der Verbindungen der Formel I, worin X² eine Estergruppe -COO- oder -OOC- bedeutet, eine Verbindung der allgemeinen Formel 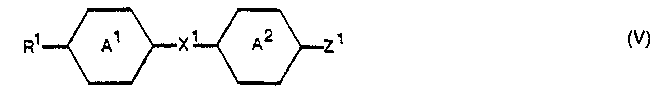 und eine Verbindung der allgemeinen Formel 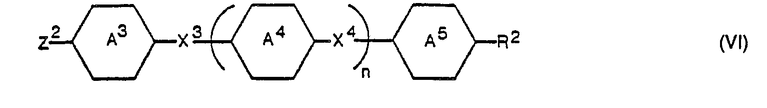 worin eine der Gruppen Z¹ und Z² die Carboxylgruppe und die andere die Hydroxygruppe bezeichnet und A¹, A², A³, A⁴, A⁵, R¹, R², X¹, X³, X⁴ und n die in Anspruch 2 gegebenen Bedeutungen haben, oder reaktionsfähige Derivate dieser Verbindungen verestert.

10. Verwendung der Verbindungen der in Anspruch 2 definierten Formel I für elektro-optische Zwecke.

## Patentansprüche (Patentansprüche für folgende(n) Vertragsstaat(en) : AT)

1. Verwendung der Verbindungen der allgemeinen Formel 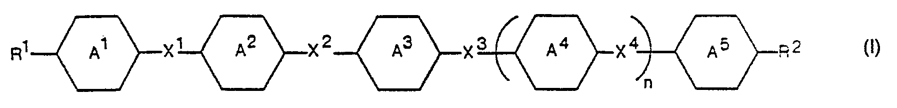 worin n für die Zahl 0 oder 1 steht ; eine der Gruppen X¹ oder X² eine Estergruppe ―COO― oder -OOC- und die übrigen der Gruppen X¹, X², X³ und X⁴ eine einfache Kovalenzbindung bedeuten, oder eine dieser Gruppen auch die Aethylengruppe ―CH₂ CH₂― bedeutet ; die Ringe A¹ und A⁵ eine Gruppe der Formel 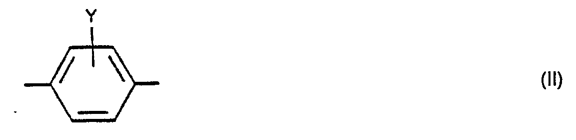 oder trans-1,4-Cyclohexylen bezeichnen ; die Ringe A², A³ und A⁴ eine Gruppe der Formel II oder, sofern sie nicht mit mindestens einem der beiden andern dieser Ringe durch eine einfache Kovalenzbindung verknüpft sind, auch trans-1,4-Cyclohexylen darstellen ; mit der Massgabe, dass mindestens einer der vorhandenen Ringe eine Gruppe der Formel II bezeichnet; Y Wasserstoff oder an einem der Ringe der Formel II, welcher nicht mit einem weiteren Ring über eine einfache Kovalenzbindung verknüpft ist, auch Fluor, Chlor oder Methyl bedeutet ; und R¹ und R² geradkettiges Alkyl mit 1 bis 7 Kohlenstoffatomen oder an einem Ring der Formel II auch geradkettiges Alkoxy mit 1 bis 7 Kohlenstoffatomen bezeichnen, als flüssigkristalline stationäre Phasen in der Gaschromatographie.

2. Flüssigkristallines Gemisch enthaltend eine oder mehrere 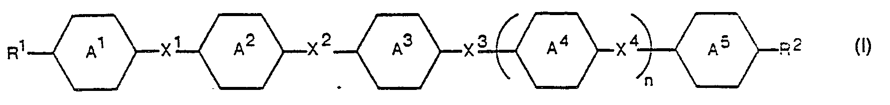 worin n für die Zahl 0 oder 1 steht ; eine der Gruppen X¹ oder X² eine Estergruppe ―COO― oder ―OOC― und die übrigen der Gruppen X¹, X², X³ und X⁴ eine einfache Kovalenzbindung bedeuten, oder eine dieser Gruppen auch die Aethylengruppe ―CH₂CH₂― bedeutet ; die Ringe A¹ und A⁵ eine Gruppe der Formel 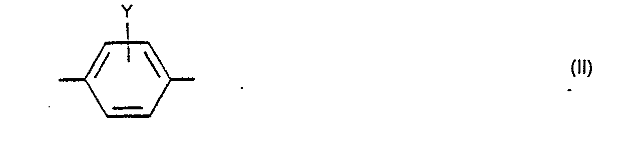 oder trans-1,4-Cyclohexylen bezeichnen ; die Ringe A², A³ und A⁴ eine Gruppe der Formel II oder, sofern sie nicht mit mindestens einem der beiden andern dieser Ringe durch eine einfache Kovalenzbindung verknüpft sind, auch trans-1,4-Cyclohexylen darstellen ; mit der Massgabe, dass mindestens einer der vorhandenen Ringe eine Gruppe der Formel II bezeichnet; Y Wasserstoff oder an einem der Ringe der Formel II, welcher nicht mit einem weiteren Ring über eine einfache Kovalenzbindung verknüpft ist, auch Fluor, Chlor oder Methyl bedeutet ; und R¹ und R² geradkettiges Alkyl mit 1 bis 7 Kohlenstoffatomen oder an einem Ring der Formel II auch geradkettiges Alkoxy mit 1 bis 7 Kohlenstoffatomen bezeichnen ; mit der Massgabe, dass, wenn n für die Zahl 0 steht, X² ―COO― oder ―OOC― bedeutet und X¹ und X³ einfache Kovalenzbindungen bedeuten, nicht zugleich die Ringe A¹ und A² oder die Ringe A³ und A⁵ trans-1,4-Cyclohexylen bezeichnen, und eine oder mehrere weitere geeignete flüssigkristalline und/oder nicht flüssigkristalline Substanzen.

3. Flüssigkristallines Gemisch nach Anspruch 2, dadurch gekennzeichnet, dass Y Wasserstoff bedeutet.

4. Flüssigkristallines Gemisch nach Anspruch 2 oder 3, dadurch gekennzeichnet, dass eine der Gruppen X¹ oder X² eine Estergruppe ―COO― oder ―OOC― und die übrigen der Gruppen X¹, X², X³ und X⁴ eine einfache Kovalenzbindung bedeuten oder, sofern X² eine Estergruppe bezeichnet, X¹ auch eine Aethylengruppe -CH₂CH₂ bedeutet.

5. Flüssigkristallines Gemisch nach einem der Ansprüche 2 bis 4, dadurch gekennzeichnet, dass mindestens einer der vorhandenen Ringe trans-1,4-Cyclohexylen darstellt.

6. Flüssigkristallines Gemisch nach einem der Ansprüche 2 bis 5, dadurch gekennzeichnet, dass n für die Zahl 1 steht.

7. Flüssigkristallines Gemisch nach Anspruch 6, dadurch gekennzeichnet, dass X² eine Estergruppe -COO- oder -OOC- bedeutet.

8. Verfahren zur Herstellung der Verbindungen der in Anspruch 2 definierten Formel I, dadurch gekennzeichnet, dass man
a) zur Herstellung der Verbindungen der Formel I, worin X' eine Estergruppe -COO- oder -OOC- bedeutet, eine Verbindung der allgemeinen Formel 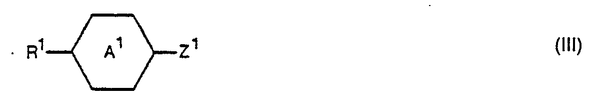 und eine Verbindung der allgemeinen Formel 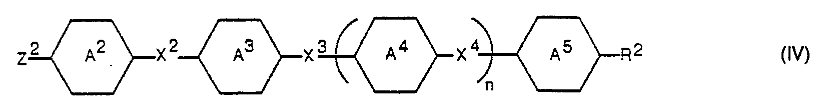 worin eine der Gruppen Z¹ und Z² die Carboxylgruppe und die andere die Hydroxygruppe bezeichnet und A¹, A², A³, A⁴, A⁵, R¹, R², X², X³, X⁴ und n die in Anspruch 2 gegebenen Bedeutungen haben, oder reaktionsfähige Derivate dieser Verbindungen verestert, oder
b) zur Herstellung der Verbindungen der Formel I, worin X² eine Estergruppe ―COO― oder ―OOC― bedeutet, eine Verbindung der allgemeinen Formel 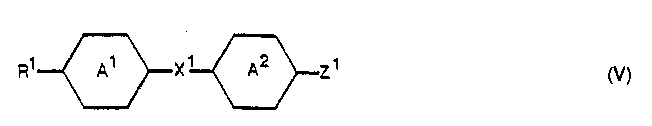 und eine Verbindung der allgemeinen Formel 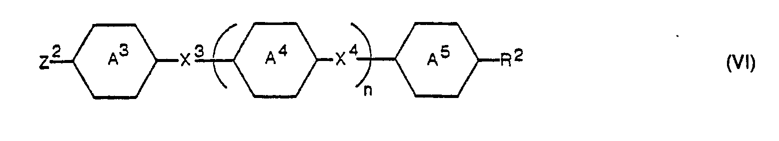 worin eine der Gruppen Z¹ und Z² die Carboxylgruppe und die andere die Hydroxygruppe bezeichnet und A¹, A², A³, A⁴, A⁵, R¹, R², X¹, X³, X⁴ und n die in Anspruch 2 gegebenen Bedeutungen haben, oder reaktionsfähige Derivate dieser Verbindungen verestert.

9. Verwendung der Verbindungen der in Anspruch 2 definierten Formel I für elektro-optische Zwecke.

## Patentansprüche (Patentansprüche für folgende(n) Vertragsstaat(en) : DE, GB)

1. Verwendung der Verbindungen der allgemeinen Formel 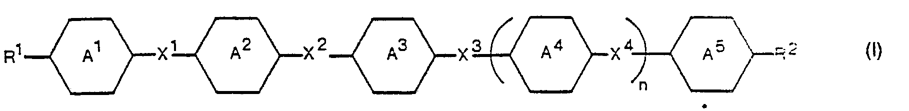 worin n für die Zahl 0 oder 1 steht ; eine der Gruppen X¹ oder X² eine Estergruppe ―COO― oder -OOC- und die übrigen der Gruppen X¹, X², X³ und X⁴ eine einfache Kovalenzbindung bedeuten, oder eine dieser Gruppen auch die Aethylengruppe ―CH₂CH₂― bedeutet ; die Ringe A¹ und A⁵ eine Gruppe der Formel. 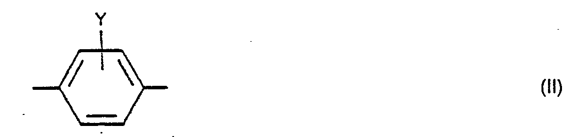 oder trans-1,4-Cyclohexylen bezeichnen ; die Ringe A², A³ und A⁴ eine Gruppe der Formel II oder, sofern sie nicht mit mindestens einem der beiden andern dieser Ringe durch eine einfache Kovalenzbindung verknüpft sind, auch trans-1,4-Cyclohexylen darstellen ; mit der Massgabe, dass mindestens einer der vorhandenen Ringe eine Gruppe der Formel II bezeichnet; Y Wasserstoff oder an einem der Ringe der Formel II, welcher nicht mit einem weiteren Ring über eine einfache Kovalenzbindung verknüpft ist, auch Fluor, Chlor oder Methyl bedeutet ; und R¹ und R² geradkettiges Alkyl mit 1 bis 7 Kohlenstoffatomen oder an einem Ring der Formel II auch geradkettiges Alkoxy mit 1 bis 7 Kohlenstoffatomen bezeichnen, als flüssigkristalline stationäre Phasen in der Gaschromatographie.

2. Verbindungen der allgemeinen Formel 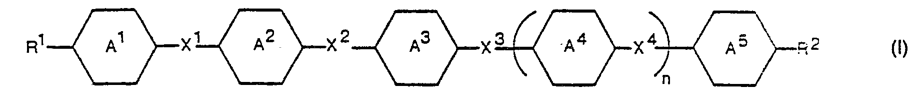 worin n für die Zahl 0 oder 1 steht ; eine der Gruppen X¹ oder X² eine Estergruppe ―COO― oder -OOC- und die übrigen der Gruppen X¹, X², X³ und X⁴ eine einfache Kovalenzbindung bedeuten, oder eine dieser Gruppen auch die Aethylengruppe ―CH₂CH₂― bedeutet ; die Ringe A¹ und A⁵ eine Gruppe der Formel 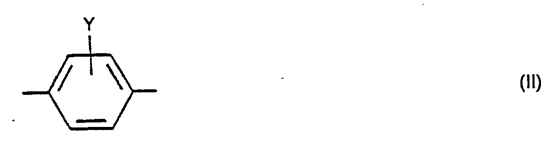 oder trans-1,4-Cyclohexylen bezeichnen ; die Ringe A², A³ und A⁴ eine Gruppe der Formel II oder, sofern sie nicht mit mindestens einem der beiden andern dieser Ringe durch eine einfache Kovalenzbindung verknüpft sind, auch trans-1,4-Cyclohexylen darstellen ; mit der Massgabe, dass mindestens einer der vorhandenen Ringe eine Gruppe der Formel II bezeichnet; Y Wasserstoff oder an einem der Ringe der Formel II, welcher nicht mit einem weiteren Ring über eine einfache Kovalenzbindung verknüpft ist, auch Fluor, Chlor oder Methyl bedeutet ; und R¹ und R² geradkettiges Alkyl mit 1 bis 7 Kohlenstoffatomen oder an einem Ring der Formel II auch geradkettiges Alkoxy mit 1 bis 7 Kohlenstoffatomen bezeichnen ; mit der Massgabe, dass, wenn n für die Zahl O steht, X² ―COO― oder ―OOC― bedeutet und X¹ und X³ einfache Kovalenzbindungen bedeuten, nicht zugleich die Ringe A¹ und A² oder die Ringe A³ und A⁵ trans-1,4-Cyclohexylen bezeichnen ; mit der weiteren Massgabe, dass nicht zugleich n für die Zahl O steht, R¹ und R² Alkyl bezeichnen, X¹ und X³ einfache Kovalenzbindungen bedeuten und entweder X² ―COO―, Ring A⁵ trans-1,4-Cyclohexylen und die Ringe A¹, A² und A³ 1,4-Phenylen darstellen oder X² -OOC-, Ring A¹ trans-1,4-Cyclohexylen und die Ringe A², A³ und A⁵ 1,4-Phenylen darstellen ; und mit der weiteren Massgabe, dass nicht zugleich n für die Zahl O steht, X² ―COO― oder ―OOC― bedeutet, X¹ und X³ einfache Kovalenzbindungen bedeuten und R¹ und R² Propyl bezeichnen ; mit der weiteren Massgabe, dass nicht zugleich n die Zahl 0 X¹ ―COO―, X² eine einfache Kovalenzbindung, X³ ―CH₂CH₂―, die Ringe A¹ und A⁵ trans-1,4-Cyclohexylen und die Ringe A² und A³ 1,4-Phenylen bedeuten.

3. Verbindungen nach Anspruch 2, dadurch gekennzeichnet, dass Y Wasserstoff bedeutet.

4. Verbindungen nach Anspruch 2 oder 3, dadurch gekennzeichnet, dass eine der Gruppen X¹ oder X² eine Estergruppe -COO- oder -OOC- und die übrigen der Gruppen X¹, X², X³ und X⁴ eine einfache Kovalenzbindung bedeuten oder, sofern X2 eine Estergruppe bezeichnet, X¹ auch eine Aethylengruppe ―CH₂CH₂― bedeutet.

5. Verbindungen nach einem der Ansprüche 2 bis 4, dadurch gekennzeichnet, dass mindestens einer der vorhandenen Ringe trans-1,4-Cyclohexylen darstellt.

6. Verbindungen nach einem der Ansprüche 2 bis 5, dadurch gekennzeichnet, dass n für die Zahl 1 steht.

7. Verbindungen nach Anspruch 6, dadurch gekennzeichnet, dass X² eine Estergruppe ―COO― oder -OOC- bedeutet.

8. Flüssigkristallines Gemisch enthaltend eine oder mehrere Verbindungen der in Anspruch 2 definierten Formel I-und eine oder mehrere weitere geeignete flüssigkristalline und/oder nicht flüssigkristalline Substanzen.

9. Verfahren zur Herstellung der Verbindungen der in Anspruch 2 definierten Formel I, dadurch gekennzeichnet, dass man
a) zur Herstellung der Verbindungen der Formel I, worin X¹ eine Estergruppe -COO- oder -OOC- bedeutet, eine Verbindung der allgemeinen Formel 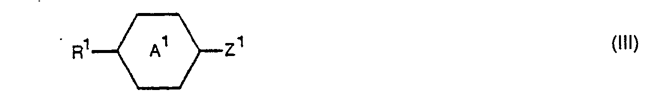 und eine Verbindung der allgemeinen Formel 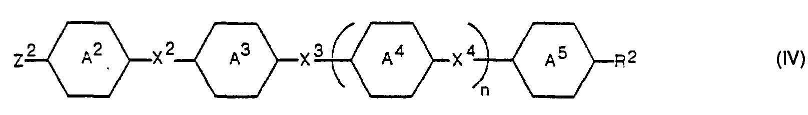 worin eine der Gruppen Z¹ und Z² die Carboxylgruppe und die andere die Hydroxygruppe bezeichnet und A¹, A², A³, A⁴, A⁵, R¹, R², X², X³, X⁴ und n die in Anspruch 2 gegebenen Bedeutungen haben, oder reaktionsfähige Derivate dieser Verbindungen verestert, oder
b) zur Herstellung der Verbindungen der Formel I, worin X² eine Estergruppe ―COO― oder ―OOC― bedeutet, eine Verbindung der allgemeinen Formel 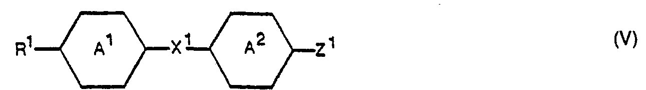 und eine Verbindung der allgemeinen Formel 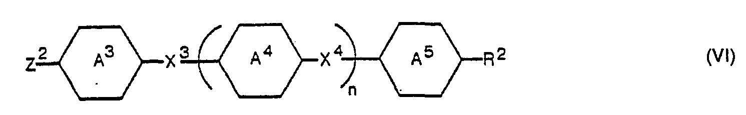 worin eine der Gruppen Z¹ und Z² die Carboxylgruppe und die andere die Hydroxygruppe bezeichnet und A¹, A², A³, A⁴, A⁵, R¹, R², X¹, X³, X⁴ und n die in Anspruch 2 gegebenen Bedeutungen haben, oder reaktionsfähige Derivate dieser Verbindungen verestert.

10. Verwendung der Verbindungen der in Anspruch 2 definierten Formel I für elektro-optische Zwecke.

## Patentansprüche (Patentansprüche für folgende(n) Vertragsstaat(en) : CH, FR, IT, LI)

1. Verwendung der Verbindungen der allgemeinen Formel 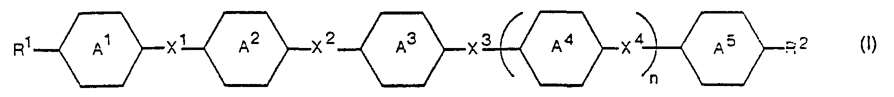 worin n für die Zahl·0 oder 1 steht ; eine der Gruppen X¹ oder X² eine Estergruppe ―COO― oder --OOC- und die übrigen der Gruppen X¹, X², X³ und X⁴ eine einfache Kovalenzbindung bedeuten, oder eine dieser Gruppen. auch die Aethylengruppe ―CH₂CH₂― bedeutet; die Ringe A¹ und A⁵ eine Gruppe der Formel 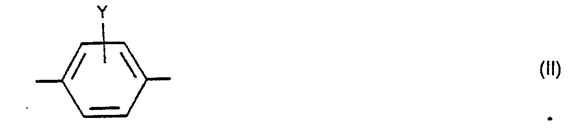 oder trans-1,4-Cyclohexylen bezeichnen ; die Ringe A², A³ und A⁴ eine Gruppe der Formel II oder, sofern sie nicht mit mindestens einem der beiden andern dieser Ringe durch eine einfache Kovalenzbindung verknüpft sind, auch trans-1,4-Cyclohexylen darstellen; mit der Massgabe, dass mindestens einer der vorhandenen Ringe eine Gruppe der Formel II bezeichnet; Y Wasserstoff oder an einem der Ringe der Formel II, welcher nicht mit einem weiteren Ring über eine einfache Kovalenzbindung verknüpft ist, auch Fluor, Chlor oder Methyl bedeutet ; und R¹ und R² geradkettiges Alkyl mit 1 bis 7 Kohlenstoffatomen oder an einem Ring der Formel II auch geradkettiges Alkoxy mit 1 bis 7 Kohlenstoffatomen bezeichnen, als flüssigkristalline stationäre Phasen in der Gaschromatographie.

2. Verbindungen der allgemeinen Formel 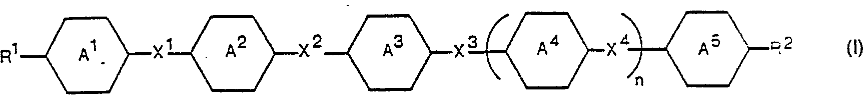 worin n für die Zahl 0 oder 1 steht ; eine der Gruppen X¹ oder X² eine Estergruppe ―COO― oder -OOC- und die übrigen der Gruppen X¹, X², X³ und X⁴ eine einfache Kovalenzbindung bedeuten, oder eine dieser Gruppen auch die Aethylengruppe ―Cr₂CH₂― bedeutet ; die Ringe A¹ und A⁵ eine Gruppe der Formel 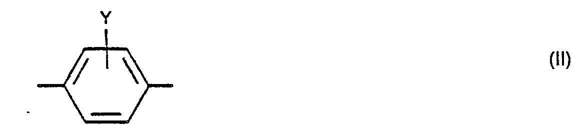 oder trans-1,4-Cyclohexylen bezeichnen ; die Ringe A², A³ und A⁴ eine Gruppe der Formel II oder, sofern sie nicht mit mindestens einem der beiden andern dieser Ringe durch eine einfache Kovalenzbindung verknüpft sind, auch trans-1,4-Cyclohexylen darstellen ; mit der Massgabe, dass mindestens einer der vorhandenen Ringe eine Gruppe der Formel II bezeichnet ; Y Wasserstoff oder an einem der Ringe der Formel II, welcher nicht mit einem weiteren Ring über eine einfache Kovalenzbindung verknüpft ist, auch Fluor, Chlor oder Methyl bedeutet ; und R¹ und R² geradkettiges Alkyl mit 1 bis 7 Kohlenstoffatomen oder an einem Ring der Formel II auch geradkettiges Alkoxy mit 1 bis 7 Kohlenstoffatomen bezeichnen ; mit der Massgabe, dass, wenn n für die Zahl 0 steht, X² ―COO― oder ―OOC― bedeutet und X¹ und X³ einfache Kovalenzbindungen bedeuten, nicht zugleich die Ringe A¹ und A² oder die Ringe A³ und A⁵ trans-1,4-Cyclohexylen bezeichnen ; mit der weiteren Massgabe, dass nicht zugleich n für die Zahl 0 steht, R¹ und R² Alkyl bezeichnen, X¹ und X³ einfache Kovalenzbindungen bedeuten und entweder X² -COO-, Ring A⁵ trans-1,4-Cyclohexylen und die Ringe A¹, A² und A³ 1,4-Phenylen darstellen oder X² ―OOC―. Ring A¹ trans-1,4-Cyclohexylen und die Ringe A², A³ und A⁵ 1,4-Phenylen darstellen ; und mit der weiteren Massgabe, dass nicht zugleich n für die Zahl 0 steht, X²―COO― oder ―OOC― bedeutet, X¹ und X³ einfache Kovalenzbindungen bedeuten und R¹ und R² Propyl bezeichnen.

3. Verbindungen nach Anspruch 2, dadurch gekennzeichnet, dass Y Wasserstoff bedeutet.

4. Verbindungen nach Anspruch 2 oder 3, dadurch gekennzeichnet, dass eine der Gruppen X¹ oder X² eine Estergruppe ―COO― oder -OOC- und die übrigen der Gruppen X¹, X², X³ und X⁴ eine einfache Kovalenzbindung bedeuten oder, sofern X² eine Estergruppe bezeichnet, X¹ auch eine Aethylengruppe ―CH₂CH₂― bedeutet.

5. Verbindungen nach einem der Ansprüche 2 bis 4, dadurch gekennzeichnet, dass mindestens einer der vorhandenen Ringe trans-1,4-Cyclohexylen darstellt.

6. Verbindungen nach einem der Ansprüche 2 bis 5, dadurch gekennzeichnet, dass n für die Zahl 1 steht.

7. Verbindungen nach Anspruch 6, dadurch gekennzeichnet, dass X² eine Estergruppe ―COO― oder -OOC- bedeutet.

8. Flüssigkristallines Gemisch enthaltend eine oder mehrere Verbindungen der in Anspruch 2 definierten Formel I und eine oder mehrere weitere geeignete flüssigkristalline und/oder nicht flüssigkristalline Substanzen.

9. Verfahren zur Herstellung der Verbindungen der in Anspruch 2 definierten Formel I, dadurch gekennzeichnet, dass man
a) zur Herstellung der Verbindungen der Formel I, worin X¹ eine Estergruppe ―COO― oder -OOC- bedeutet, eine Verbindung der allgemeinen Formel 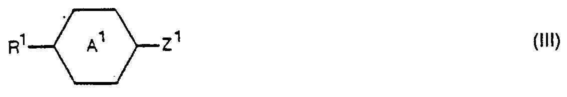 und eine Verbindung der allgemeinen Formel 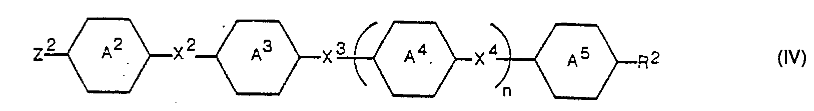 worin eine der Gruppen Z¹ und Z² die Carboxylgruppe und die andere die Hydroxygruppe bezeichnet und A¹, A², A³, A⁴, A⁵, R¹, R², X², X³, X⁴ und n die in Anspruch 2 gegebenen Bedeutungen haben, oder reaktionsfähige Derivate dieser Verbindungen verestert, oder
b) zur Herstellung der Verbindungen der Formel I, worin X² eine Estergruppe -COO- oder -OOC- bedeutet, eine Verbindung der allgemeinen Formel 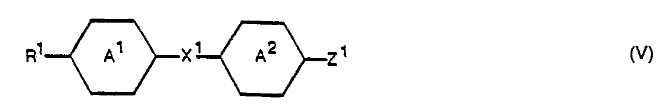 und eine Verbindung der allgemeinen Formel 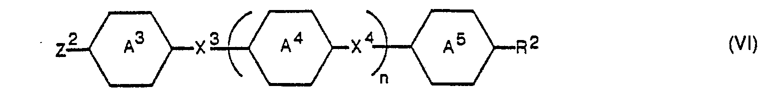 worin eine der Gruppen Z¹ und Z² die Carboxylgruppe und die andere die Hydroxygruppe bezeichnet und A¹, A², A³, A⁴, A⁵, R¹, R², X¹, X³, X⁴ und n die in Anspruch 2 gegebenen Bedeutungen haben, oder reaktionsfähige Derivate dieser Verbindungen verestert.

10. Verwendung der Verbindungen der in Anspruch 2 definierten Formel I für elektro-optische Zwecke.

## Claims (Claims for the following Contracting State(s) : BE)

1. Compounds of the general formula 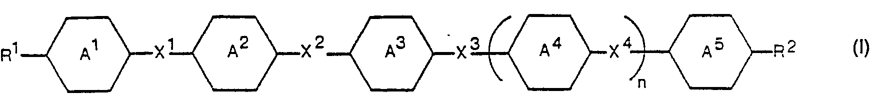 wherein n stands for the number 0 or 1 ; one of the groups X¹ or X² signifies an ester group -COO- or -OOC- and the remainder of the groups X¹, X², X³ und X⁴ signify a single covalent bond or one of these groups also signifies the ethylene group ―CH₂CH₂―; the rings A¹ and A⁵ denote a group of the formula 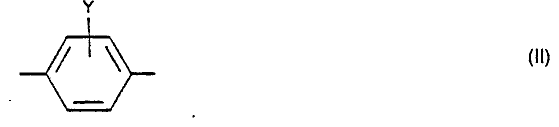 or trans-1,4-cyclohexylene ; the rings A², A3 and A4 represent a group of formula II or, provided that they are not linked with at least one of the other two of these rings by a single covalent bond, also trans-1,4-cyclohexylene ; with the proviso that at least one of the rings present denotes a group of formula II ; Y signifies hydrogen or on one of the rings of formula II which is not linked with a further ring via a single covalent bond, also fluorine, chlorine or methyl ; and R¹ and R² denote straight-chain alkyl with 1 to 7 carbon atoms or on a ring of formula-ll also straight-chain alkoxy with 1 to 7 carbon atoms.

2. Compounds according to claim 1, characterized in that Y signifies hydrogen.

3. Compounds according to claim 1 or 2, characterized in that one of the groups X¹ or X² signifies an ester group -COO- or ―OOC― and the remainder of the groups X¹, X², X³ and X⁴ signify a single covalent bond or, provided that X² denotes an ester group, X¹ also signifies an ethylene group ―CH₂CH₂―.

4. Compounds according to claim 3, characterized in that one of the groups X¹ or X² signifies an ester group -COO- or ―OOC― and the remainder of the groups X¹, X², X³ and X⁴ signify a single covalent bond.

5. Compounds according to any one of claims 1 to 4, characterized in that at least one of the rings present represents trans-1,4-cyclohexylene.

6. Compounds according to any one of claims 1 to 5, characterized in that one of the groups X¹ or X² signifies an ester group -COO- or ―OOC― and the remainder of the groups X¹, X², X³ and X⁴ signify a single covalent bond ; the rings A¹ and A⁵ denote 1,4-phenylene or trans-1,4-cyclohexylene ; the rings A², A3 and A4 represent 1,4-phenylene or, provided that they are not linked with at least one of the other two of these rings by a single covalent bond, also trans-1,4-cyclohexylene ; and at least one of the rings present denotes 1,4-phenylene and at least one of the rings present denotes trans-1,4-cyclohexylene.

7. Compounds according to any one of claims 1 to 6, characterized in that n stands for the number 1.

8. Compounds according to claim 7, characterized in that X² signifies an ester group -COO- or -OOC-.

9. Compounds according to any one of claims 1 to 8, characterized in that R' and R² denote straight-chain alkyl with 1 to 7 carbon atoms.

10. Compounds according to any one of claims 1 to 9, characterized in that the sum of the carbon atoms in the residues R¹ and R² is 5 to 10.

11. A liquid crystalline mixture containing one or more compounds of formula I defined in claim 1 and one or more other suitable liquid crystalline and/or non-liquid crystalline substances.

12. A process for the manufacture of the compounds of formula I defined in claim 1, characterized by
a) for the manufacture of the compounds of formula I in which X¹ signifies an ester group ―COO― or -OOC-, esterifying a compound of the general formula 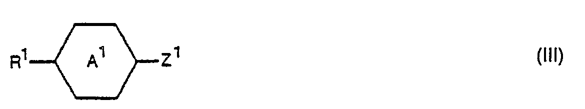 and a compound of the general formula 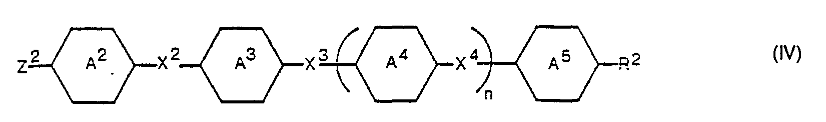 wherein one of the groups Z¹ and Z² denotes the carboxyl group and the other denotes the hydroxy group and A¹, A², A3, A4, A⁵, R¹, R², X², X³, X⁴ and n have the significances given in claim 1, or reactive derivatives of these compounds, or
b) for the manufacture of the compounds of formula I in which X² signifies an ester group -COO-or ―OOC―, esterifying a compound of the general formula 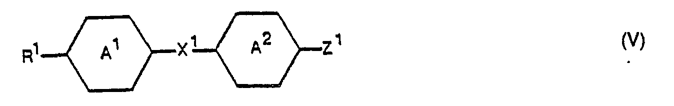 and a compound of the general formula 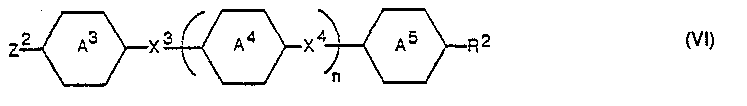 wherein one of the groups Z¹ and Z² denotes the carboxyl group and the other denotes the hydroxy group and A^{l}, A², A³, A⁴, A⁵, R¹, R², X¹, X³, X⁴ and n have the significances given in claim 1, or reactive derivatives of these compounds.

13. The use of the compounds of formula I defined in claim 1 for electro-optical purposes.

14. The use of the compounds of formula I defined in claim 1 as liquid crystalline stationary phases in gas chromatography.

## Claims (Claims for the following Contracting State(s) : NL)

1. The use of the compounds of the general formula 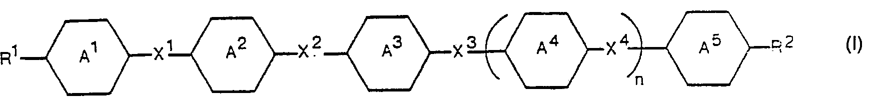 wherein n stands for the number 0 or 1 ; one of the group X¹ or X² signifies an ester group -COO- or ―OOC― and the remainder of the groups X^{l}, X², X³ and X⁴ signify a single covalent bond or one of these groups also signifies the ethylene group ―CH₂CH₂―; the rings A¹ and A⁵ denote a group of the formula 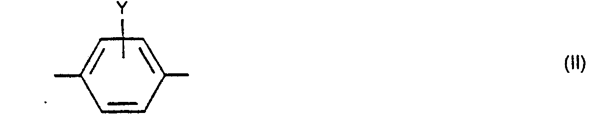 or trans-1,4-cyclohexylene ; the rings A², A3 and A4 represent a group of formula II or, provided that they are not linked with at least one of the other two of these rings by a single covalent bond, also trans-1,4-cyclohexylene ; with the proviso that at least one of the rings present denotes a group of formula II ; Y signifies hydrogen or on one of the rings of formula li which is not linked with a further ring via a single covalent bond, also fluorine, chlorine or methyl ; and R' and R2 denote straight-chain alkyl with 1 to 7 carbon atoms or on a ring of formula II also straight-chain alkoxy with 1 to 7 carbon atoms, as liquid crystalline stationary phases in gas chromatography.

2. Compounds of the general formula 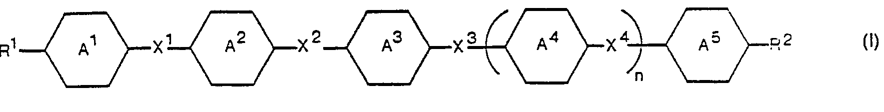 wherein n stands for the number 0 or 1 ; one of the group X¹ or X² signifies an ester group -COO- or ―OOC― and the remainder of the groups X¹, X², X³ and X⁴ signify a single covalent bond or one of the groups also signifies the ethylene group ―CH₂CH₂―; the rings A¹ and A⁵ denote a group of the formula 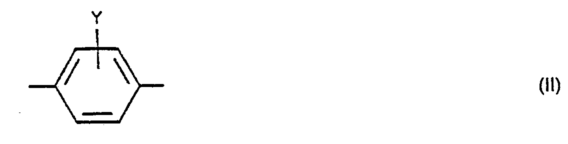 or trans-1,4-cyclohexylene ; the rings A², A3 and A4 represent a group of formula II or, provided that they are not linked with at least one of the other two of these rings by a single covalent bond, also trans-1,4-cyclohexylene ; with the proviso that at least one of the rings present denotes a group of formula II ; Y signifies hydrogen or on one of the rings of formula II which is not linked with a further ring via a single covalent bond, also fluorine, chlorine or methyl ; and R' and R² denote straight-chain alkyl with 1 to 7 carbon atoms or on a ring of formula II also straight-chain alkoxy with 1 to 7 carbon atoms ; with the proviso that the rings A¹ and A² or the rings A3 and A⁵ do not simultaneously denote trans-1,4-cyclohexylene when n stands for the number 0, X² signifies -COO- or -OOC- and X¹ and X³ signify single covalent bonds.

3. Compounds according to claim 2, characterized in that Y signifies hydrogen.

4. Compounds according to claim 2 or 3, characterized in that one of the groups X¹ or X² signifies an ester group -COO- or -OOC- and the remainder of the groups X¹, X², X³ and X⁴ signify a single covalent bond or, provided that X² denotes an ester group, X¹ also signifies an ethylene group ―CH₂CH₂―.

5. Compounds according to any one of claims 2 to 4, characterized in that at least one of the rings present represents trans-1,4-cyclohexylene.

6. Compounds according to any one of claims 2 to 5, characterized in that n stands for the number 1.

7. Compounds according to claim 6, characterized in that X² signifies an ester group -COO- or ―OOC―

8. A liquid crystalline mixture containing one or more.compounds of formula I defined in claim 2 and one or more other suitable liquid crystalline and/or non-liquid crystalline substances.

9. A process for the manufacture of the compounds of formula I defined in claim 2, characterized by
a) for the manufacture of the compounds of formula I in which X¹ signifies an ester group -COO-or ―OOC―, esterifying a compound of the general formula 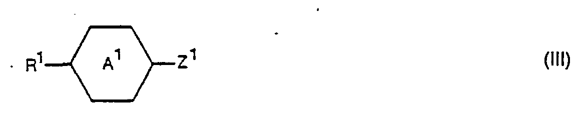 and a compound of the general formula 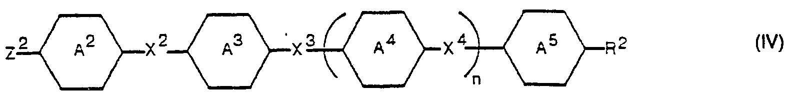 wherein one of groups Z¹ and Z² denotes the carboxyl group and the other denotes the hydroxy group and A¹, A², A³, A⁴, A⁵, R¹, R², X², X³, X⁴ and n have the significances given in claim 2, or reactive derivatives or these compounds, or
b) for the manufacture of the compounds of formula I in which X² signifies an ester group ―COO― or ―OOC―, esterifying a compound of the general formula 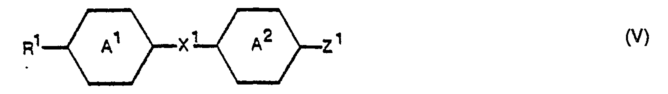 and a compound of the general formula 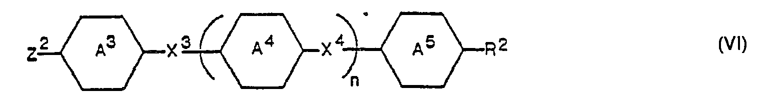 wherein one of the groups Z¹ and Z² denotes the carboxyl group and the other denotes the hydroxy group and A¹, A², A³, A⁴, A⁵, R¹, R², X¹, X³, X⁴ and n have the significances given in claim 2, or reactive derivatives of these compounds.
10. The use of the compounds of formula I defined in claim 2 for electro-optical purposes.

## Claims (Claims for the following Contracting State(s) : AT)

1. The use of the compounds of the general formula 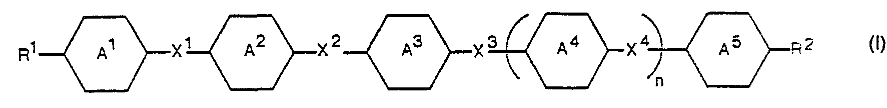 wherein n stands for the number 0 or 1 ; one of the group X¹ or X² signifies an ester group -COO- or -OOC- and the remainder of the groups X¹, X², X³ and X⁴ signify a single covalent bond or one of these groups also signifies the ethylene group ―CH₂CH₂―; the rings A¹ and A⁵ denote a group of the formula 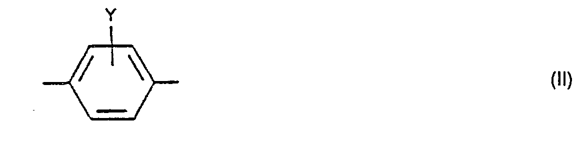 or trans-1,4-cyclohexylene ; the rings A², A3 and A4 represent a group of formula II or, provided that they are not linked with at least one of the other two of these rings by a single covalent bond, also trans-1,4-cyclohexylene ; with the proviso that at least one of the rings present denotes a group of formula II ; Y signifies hydrogen or on one of the rings of formula II which is not linked with a further ring via a single covalent bond, also fluorine, chlorine or methyl and R¹ and R² denote straight-chain alkyl with 1 to 7 carbon atoms or on a ring of formula II also straight-chain alkoxy with 1 to 7 carbon atoms, as liquid crystalline stationary phases in gas chromatography.

2. A liquid crystalline mixture containing one or more 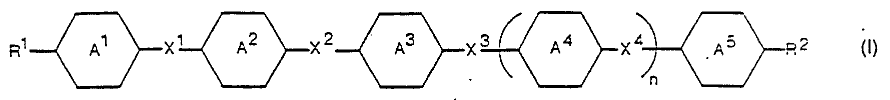 wherein n stands for the number 0 or 1 ; one of the group X¹ or X² signifies an ester group -COO- or ―OOC― and the remainder of the groups X¹, X², X³ and X⁴ signify a single covalent bond or one of these groups also signifies the ethylene group ―CH₂CH₂―; the rings A¹ and A⁵ denote a group of the formula 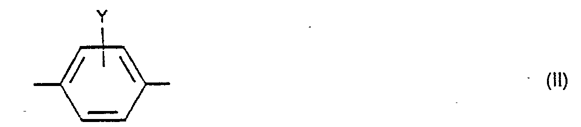 or trans-1,4-cyclohexylene ; the rings A², A3 and A4 represent a group of formula II or, provided that they are not linked with at least one of the other two of these rings by a single covalent bond, also trans-1,4-cyclohexylene ; with the proviso that at least one of the rings present denotes a group of formula II ; Y signifies hydrogen or on one of the rings of formula II which is not linked with a further ring via a single covalent bond, also fluorine, chlorine or methyl ; and R¹ and R² denote straight-chain alkyl with 1 to 7 carbon atoms or on a ring of formula II also straight-chain alkoxy with 1 to 7 carbon atoms ; with the proviso that the rings A¹ and A² or the rings A3 and A⁵ do not simultaneously denote trans-1,4-cyclohexylene when n stands for the number 0, X² signifies --COO- or -OOC- and X¹ and X³ signify single covalent bonds, and one or more other suitable liquid crystalline and/or non-liquid cyrstalline substances.

3. A liquid crystalline mixture according to claim 2, characterized in that Y signifies hydrogen.

4. A liquid crystalline mixture according to claim 2 or 3, characterized in that one of the groups X¹ or X² signifies an ester group -COO- or -OOC- and the remainder of the groups X¹, X², X³ and X⁴ signify a single covalent bond or, provided that X² denotes an ester group, X¹ also signifies an ethylene group ―CH₂CH₂―.

5. A liquid crystalline mixture according to any one of claims 2 to 4, characterized in that at least one of the rings present represents trans-1,4-cyclohexylene.

6. A liquid crystalline mixture according to any one of claims 2 to 5, characterized in that n stands for the number 1.

7. A liquid crystalline mixture according to claim 6, characterized in that X² signifies an ester group -COO- or -OOC-.

8. A process for the manufacture of the compounds of formula I defined in claim 2, characterized by
a) for the manufacture of the compounds of formula I in which X¹ signifies an ester group -COO-or -OOC-, esterifying a compound of the general formula 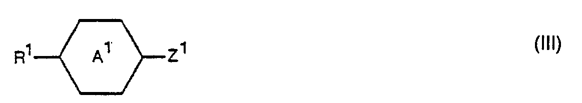 and a compound of the general formula 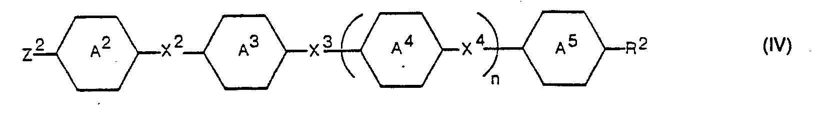 wherein one of groups Z¹ and Z² denotes the carboxyl group and the other denotes the hydroxy group and A¹, A¹, A3, A4, _{A}⁵, R¹, R², X², X³, X⁴ and n have the significances given in claim 2, or reactive derivatives or these compounds, or
b) for the manufacture of the compounds of formula I in which X² signifies an ester group -COO- or -OOC- esterifying a compound of the general formula 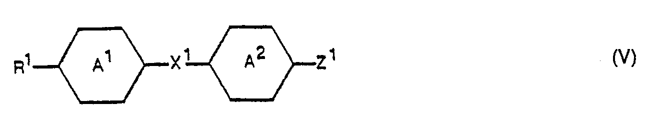 and a compound of the general formula 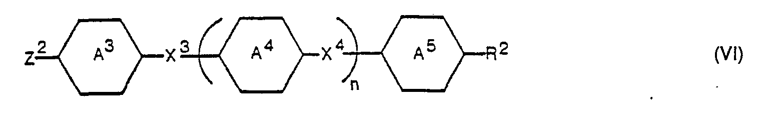 wherein one of the groups Z¹ and Z² denotes the carboxyl group and the other denotes the hydroxy group and A¹, A², A3, A4, A⁵, R¹, R², X¹, X³, X⁴ and n have the significances given in claim 2, or reactive derivatives of these compounds.

9. The use of the compounds of formula I defined in claim 2 for electro-optical purposes.

## Claims (Claims for the following Contracting State(s) : DE, GB)

1. The use of the compounds of the general formula 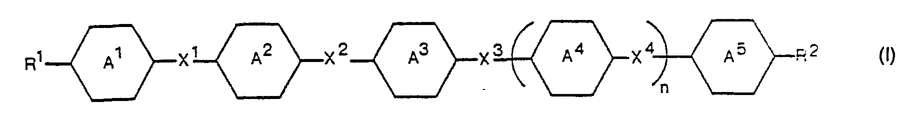 wherein n stands for the number 0 or 1 ; one of the group X¹ or X² signifies an ester group ―COO― or ―OOC― and the remainder of the groups X¹, X², X³ and X⁴ signify a single covalent bond or one of these groups also signifies the ethylene group ―CH₂CH₂―; the rings A¹ and A⁵ denote a group of the formula 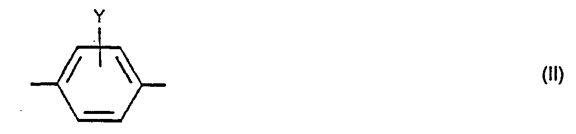 or trans-1,4-cyclohexylene ; the rings A², A3 and A4 represent a group of formula II or, provided that they are not linked with at least one of the other two of these rings by a single covalent bond, also trans-1,4-cyclohexylene ; with the proviso that at least one of the rings present denotes a group of formula II ; Y signifies hydrogen or on one of the rings of formula II which is not linked with a further ring via a single covalent bond, also fluorine, chlorine or methyl ; and R¹ and R² denote straight-chain alkyl with 1 to 7 carbon atoms or on a ring of formula II also straight-chain alkoxy with 1 to 7 carbon atoms, as liquid crystalline stationary phases in gas chromatography.

2. Compounds of the general formula 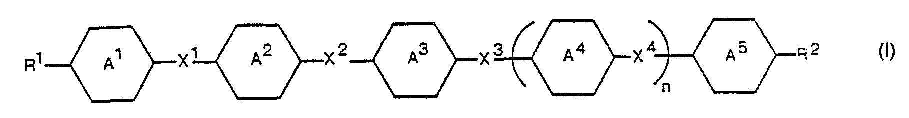 wherein n stands for the number 0 or 1 ; one of the group X¹ or X² signifies an ester group -COO- or ―OOC― and the remainder of the groups X¹, X², X³ and X⁴ signify a single covalent bond or one of these groups also signifies the ethylene group ―CH₂CH₂―; the rings A¹ and A⁵ denote a group of the formula 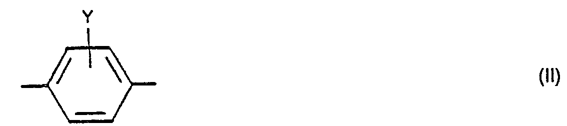 or trans-1,4-cyclohexylene ; the rings A², A3 and A4 represent a group of formula II or, provided that they are not linked with at least one of the other two of these rings by a single covalent bond, also trans-1,4-cyclohexylene ; with the proviso that at least one of the rings present denotes a group of formula II ; Y signifies hydrogen or on one of the rings of formula II which is not linked with a further ring via a single covalent bond, also fluorine, chlorine or methyl ; and R¹ and R² denote straight-chain alkyl with 1 to 7 carbon atoms or on a ring of formula II also straight-chain alkoxy with 1 to 7 carbon atoms ; with the proviso that the rings A¹ and A² or the rings A3 and A⁵ do not simultaneously denote trans-1,4-cyclohexylene when n stands for the number 0, X² signifies -COO- or -OOC- and X¹ and X³ signify single covalent bonds ; with the further proviso that simultaneously n does not stand for the number 0, R¹ and R² do not denote alkyl, X¹ and X³ do not signify single covalent bonds and either X² does not represent ―COO―, ring A⁵ does not represent trans-1,4-cyclohexylene and the rings A¹, A² and A3 do not represent 1,4-phenylene or X² does not represent -OOC-, ring A¹ does not represent trans-1,4-cyclohexylene and the rings A², A3 and A⁵ do not represent 1,4-phenylene : and with the further proviso that simultaneously n does not stand for the number 0, X² does not signify ―COO― or ―OOC―, X¹ and X³ do not signify single covalent bonds and R¹ and R² do not denote propyl ; with the further proviso that simultaneously n does not signify the number 0, X¹ does not signify―COO―, X² does not signify a single covalent bond, X³ does not signify ―CH₂CH₂―, the rings A¹ and A⁵ do not signify trans-1,4-cyclohexylene and the rings A² and A3 do not signify 1,4-phenylene.

3. Compounds according to claim 2, characterized in that Y signifies hydrogen.

4. Compounds according to claim 2 or 3, characterized in that one of the groups X¹ or X² signifies an ester group -COO- or ―OOC― and the remainder of the groups X¹, X², X³ and X⁴ signify a single covalent bond or, provided that X² denotes an ester group, X¹ also signifies an ethylene group ―CH₂CH₂―.

5. Compounds according to any one of claims 2 to 4, characterized in that at least one of the rings present represents trans-1,4-cyclohexylene.

6. Compounds according to any one of claims 2 to 5, characterized in that n stands for the number 1.

7. Compounds according to claim 6, characterized in that X² signifies an ester group -COO- or -OOC-.

8. A liquid crystalline mixture containing one or more compounds of formula I defined in claim 2 and one or more other suitable liquid crystalline and/or non -liquid crystalline substances.

9. A process for the manufacture of the compounds of formula I defined in claim 2, characterized by
a) for the manufacture of the compounds of formula I in which X¹ signifies an ester group ―COO― or -OOC-, esterifying a compound of the general formula 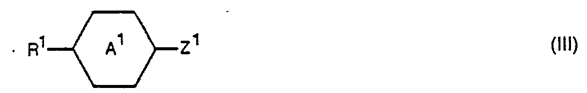 and a compound of the general formula 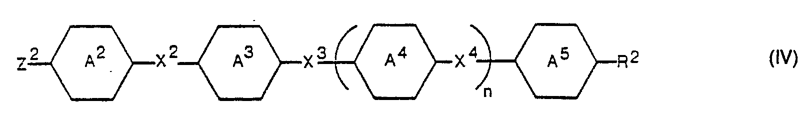 wherein one of groups Z¹ and Z² denotes the carboxyl group and the other denotes the hydroxy group and A¹, _{A}², A3, A4, A⁵, R¹, R², X², X³, X⁴ and n have the significances given in claim 2, or reactive derivatives of these compounds, or
b) for the manufacture of the compounds of formula I in which X² signifies an ester group -COO- or ―OOC―, esterifying a compound of the general formula 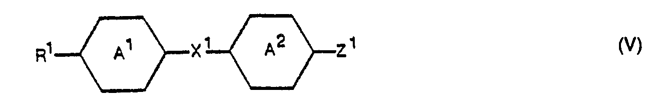 and a compound of the general formula 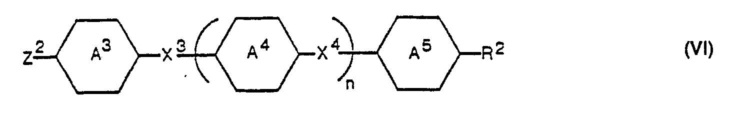 wherein one of the groups Z¹ and Z² denotes the carboxyl group and the other denotes the hydroxy group and A¹, A², A³, A⁴, A⁵, R¹, R², X¹, X³, X⁴ and n have the significances given in claim 2, or reactive derivatives of these compounds.
10. The use of the compounds of formula I defined in claim 2 for electro-optical purposes.

## Claims (Claims for the following Contracting State(s) : CH, FR, IT, LI)

1. The use of the compounds of the general formula 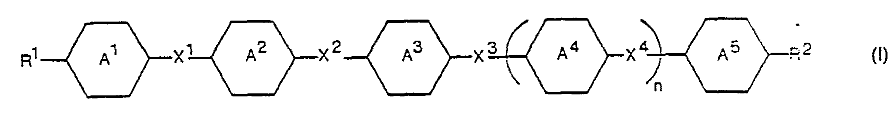 wherein n stands for the number 0 or 1 ; one of the group X¹ or X² signifies an ester group -COO- or -OOC- and the remainder of the groups X¹, X², X³ and X⁴ signify a single covalent bond or one of these groups also signifies the ethylene group ―CH₂CH₂―; the rings A¹ and A⁵ denote a group of the formula 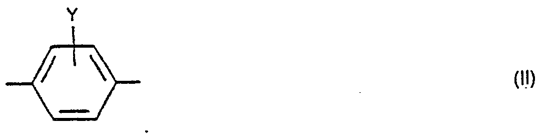 or trans-1,4-cyclohexylene ; the rings A², A3 and A4 represent a group of formula II or, provided that they are not linked with at least one of the other two of these rings by a single covalent bond, also trans-1,4-cyclohexylene ; with the proviso that at least one of the rings present denotes a group of formula II ; Y signifies hydrogen or on one of the rings of formula II which is not linked with a further ring via a single covalent bond, also fluorine, chlorine or methyl ; and R¹ and R² denote straight-chain alkyl with 1 to 7 carbon atoms or on a ring of formula II also straight-chain alkoxy with 1 to 7 carbon atoms, as liquid crystalline stationary phases in gas chromatography.

2. Compounds of the general formula 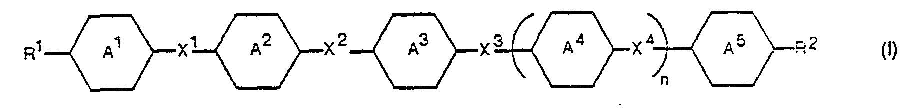 wherein n stands for the number 0 or 1 ; one of the group X¹ or X² signifies an ester group -COO- or ―OOC― and the remainder of the groups X¹, X², X³ and X⁴ signify a single covalent bond or one of these groups also signifies the ethylene group ―CH₂CH₂― ; the rings A¹ and A⁵ denote a group of the formula 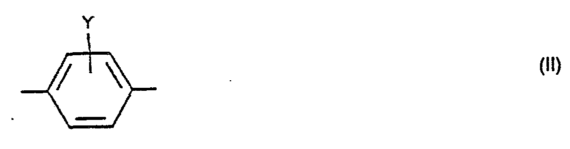 or trans-1,4-cyclohexylene ; the rings A², A3 and A4 represent a group of formula II or, provided that they are not linked with at least one of the other two of these rings by a single covalent bond, also trans-1,4-cyclohexylene ; with the proviso that at least one of the rings present denotes a group of formula II ; Y signifies hydrogen or on one of the rings of formula II which is not linked with a further ring via a single covalent bond, also fluorine, chlorine or methyl ; and R¹ and R² denote straight-chain alkyl with 1 to 7 carbon atoms or on a ring of formula II also straight-chain alkoxy with 1 to 7 carbon atoms ; with the proviso that the rings A¹ and A² of the rings A3 and A⁵ do not simultaneously denote trans-1,4-cyclohexylene when n stands for the number 0, X² signifies -COO- or -OOC- and X¹ and X³ signify single covalent bonds ; with the further proviso that simultaneously n does not stand for the number 0, R' and R² do not denote alkyl, X¹ and X³ do not signify single covalent bonds and either X² does not signify -COO-, ring A⁵ does not signify trans-1,4-cyclohexylene and the rings A¹, A² and A3 do not represent 1,4-phenylene or X² does not represent ―OOC―, ring A¹ does not represent trans-1,4-cyclohexylene and the rings A², A3 and A⁵ do not represent 1,4-phenylene ; and with the further proviso that simultaneously n does not stand for the number 0, X² does not signify -COO- or -OOC-, X¹ and X³ do not signify single covalent bonds and R¹ and R² do not denote propyl.

3. Compounds according to claim 2, characterized in that Y signifies hydrogen.

4. Compounds according to claim 2 or 3, characterized in that one of the groups X¹ or X² signifies an ester group ―COO― or -OOC- and the remainder of the groups X¹, X², X³ and X⁴ signify a single covalent bond or, provided that X² denotes an ester group, X¹ also signifies an ethylene group ―CH₂CH₂―.

5. Compounds according to any one of claims 2 to 4, characterized in that at least one of the rings present represents trans-1,4-cycohexylene.

6. Compounds according to any one of claims 2 to 5, characterized in that n stands for the number 1.

7. Compounds according to claim 6, characterized in that X² signifies an ester group ―COO― or -OOC-.

8. A liquid crystalline mixture containing one or more compounds of formula I defined in claim 2 and one or more other suitable liquid crystalline and/or non-liquid crystalline substances.

9. A process for the manufacture of the compounds of formula I defined in claim 2, characterized by
a) for the manufacture of the compounds of formula I in which X' signifies an ester group ―COO― or -OOC-, esterifying a compound of the general formula 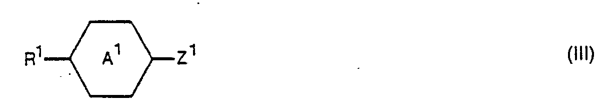 and a compound of the general formula 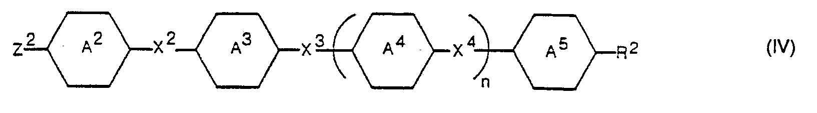 wherein one of groups Z¹ and Z² denotes the carboxy group and the other denotes the hydroxy group and A¹, A², A3, A4, A⁵, R¹, R², X², X³, X⁴ and n have the significances given in claim 2, or reactive derivatives of these compounds, or
b) for the manufacture of the compounds of formula I which X² signifies an ester group -COO-or -OOC-, esterifying a compound of the general formula 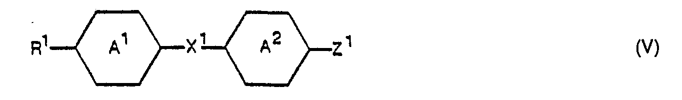 and a compound of the general formula 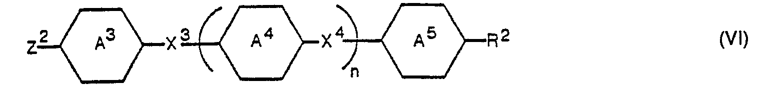 wherein one of the groups Z¹ and Z² denotes the carboxy group and the other denotes the hydroxy group and A¹, A², A³, A⁴, A⁵, R¹, R², X¹, X³, X⁴ and n have the significances given in claim 2, or reactive derivatives of these compounds.

10. The use of the compounds of formula I defined in claim 2 for electro-optical purposes.

## Revendications (Revendications pour l'(les) Etat(s) contractant(s) suivant(s) : BE)

1. Composés de formule générale 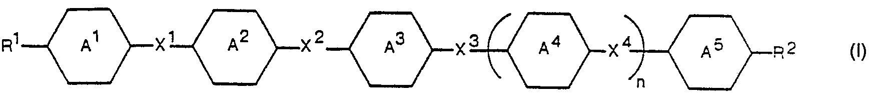 dans laquelle n est égal à 0 ou 1 ; l'un des symboles X¹ ou X² représente un groupe ester -COO- ou -OOC- et l'autre, ainsi que les symboles X³ et X⁴, représentent une liaison covalente simple, ou bien l'un de ces symboles représente le groupe éthylène ―CH₂CH₂―; les cycles A¹ et A5 sont des cycles de formule 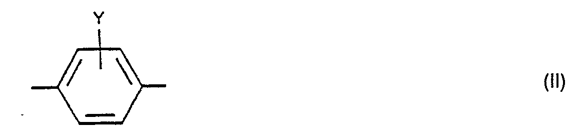 ou des cycles trans-1,4-cyclohexylène ; les cycles A², A³ et A⁴ sont des cycles de formule II ou bien, à condition qu'ils ne soient pas reliés par une liaison covalente simple à l'un au moins des deux autres de ces cycles, des cycles trans-1,4-cyclohexylène ; avec la restriction que l'un au moins des cycles présents doit être un cycle de formule Il ; Y représente l'hydrogène ou encore, sur l'un des cycles de formule II qui n'est pas relié à un autre cycle par une liaison covalente simple, le fluor, le chlore ou un groupe méthyle ; et R¹ et R² représentent des groupes alkyle à chaîne droite en C 1-C 7 ou bien encore, sur un cycle de formule II, des groupes alcoxy à chaîne droite en C 1-C 7.

2. Composés selon la rev. 1, caractérisés en ce que Y représente l'hydrogène.

3. Composés selon la rev. 1 ou 2, caractérisés en ce que l'un des symboles X¹ ou X² représente un groupe ester ―COO― ou -OOC- et l'autre, ainsi que les symboles X³ et X⁴, représentent des liaisons covalentes simples ou bien, lorsque X² représente un groupe ester, X¹ peut encore représenter un groupe éthylène ―CH₂CH₂―.

4. Composés selon la rev. 3, caractérisés en ce que l'un des symboles X¹ ou X² représente un groupe ester -COO- ou -OOC- et l'autre, ainsi que les symboles X³ et X⁴, représentent des liaisons covalentes simples.

5. Composés selon l'une des rev. 1 à 4, caractérisés en ce que l'un au moins des cycles présents est un cycle trans-1,4-cyclohexylène.

6. Composés selon l'une des rev. 1 à 5, caractérisés en ce que l'un des symboles X¹ ou X² représente un groupe ester ―COO― ou ―OOC― et l'autre, ainsi que les symboles X³ et X⁴, représentent une liaison covalente simple ; les cycles A' et A5 sont des cycles 1,4-phénylène ou trans-1,4-cyclohexylène ; les cycles A², A³ et A⁴ sont des cycles 1,4-phénylène ou bien, à condition qu'ils ne soient pas reliés par une liaison covalente simple à l'un au moins des deux autres de ces cycles, des cycles trans-1,4-cyclohexylène ; et l'un au moins des cycles présents est un cycle 1,4-phénylène et l'un au moins des cycles présents est un cycle trans-1,4-cyclohexylène.

7. Composés selon l'une des rev. 1 à 6, caractérisés en ce que n est égal à 1.

8. Composés selon la rev. 7, caractérisés en ce que X² représente un groupe ester -COO- ou -OOC-.

9. Composés selon l'une des rev. 1 à 8, caractérisés en ce que R¹ et R₂ représentent des groupes alkyle à chaîne droite en C 1-C 7.

10. Composés selon l'une des rev. 1 à 9, caractérisés en ce que la somme des atomes de carbone des restes R¹ et R² va de 5 à 10.

11. Mélange à cristaux liquides contenant un ou plusieurs composés de formule I définie dans la rev. 1 et une ou plusieurs autres substances appropriées à cristaux liquides et/ou non à cristaux liquides.

12. Procédé de.préparation des composés de formule I définie dans la rev. 1, caractérisé en ce que :
a) pour préparer des composés de formule I dans laquelle X¹ représente un groupe ester ―COO― ou ―OOC―, on estérifie un composé de formule générale 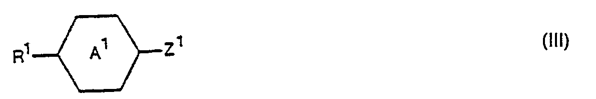 et un composé de formule générale 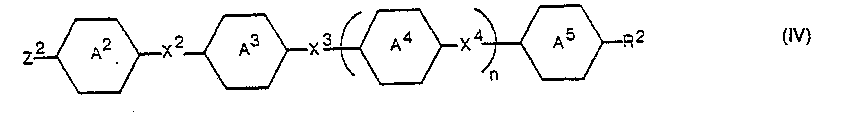 dans lesquels l'un des symboles Z¹ et Z² représente le groupe carboxy et l'autre le groupe hydroxy et A¹, A2, A³, A⁴, A5, R¹, R², X², X³, X⁴ et n ont les significations indiquées dans la rev. 1, ou des dérivés réactifs de ces composés, ou bien
b) pour préparer les composés de formule I dans laquelle X² représente un groupe ester ―COO― ou -OOC-, on estérifie un composé de formule générale 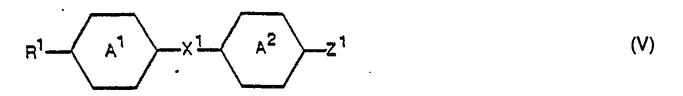 et un composé de formule générale 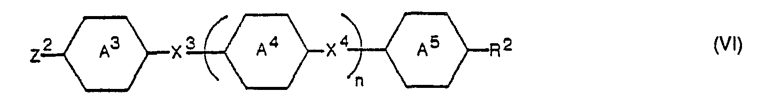 dans lesquels l'un des symboles Z¹ et Z² représente le groupe carboxyle et l'autre le groupe hydroxy et A¹, A², A³, A⁴, A⁵, R¹, R², X¹, X³, X⁴ et n ont les significations indiquées dans la rev. 1, ou des dérivés réactifs de ces composés.

13. Utilisation des composés de formule 1 définie dans la rev. 1, dans des applications électro-optiques.

14. Utilisation des composés de formule I définie dans la rev. 1, en tant que phases stationnaires à cristaux liquides dans la chromatographie en phase gazeuse.

## Revendications (Revendications pour l'(les) Etat(s) contractant(s) suivant(s) : NL)

1. Utilisation des composés de formule générale 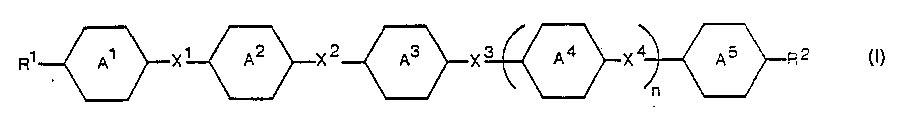 dans laquelle n est égal à 0 ou 1 ; l'un des symboles X¹ ou X² représente un groupe ester ―COO― ou ―OOC― et l'autre, ainsi que les symboles X³ et X⁴, représentent une liaison covalente simple, ou bien l'un de ces symboles représente le groupe éthylène ―CH₂CH₂―; les cycles A' et A5 sont des cycles de formule 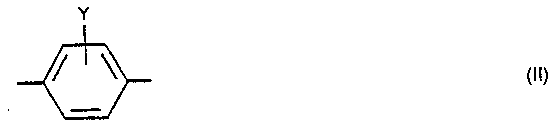 ou des cycles trans-1,4-cyclohexylène ; les cycles A², A³ et A⁴ sont des cycles de formule Il ou bien, à condition qu'ils ne soient pas reliés par une liaison covalente simple à au moins un des deux autres de ces cycles, des cycles trans-1,4-cyclohexylène ; avec la restriction que l'un au moins des cycles présents doit être un cycle de formule Il ; Y représente l'hydrogène ou encore, sur l'un des cycles de formule II qui n'est pas relié par une liaison covalente simple à un autre cycle, le fluor, le chlore ou un groupe méthyle ; et R¹ et R² représentent des groupes alkyle à chaîne droite en C 1-C 7 ou bien encore, sur un cycle de formule II, des groupes alcoxy à chaîne droite en C 1-C 7, en tant que phases stationnaires à cristaux liquides dans la chromatographie en phase gazeuse.

2. Composés de formule générale 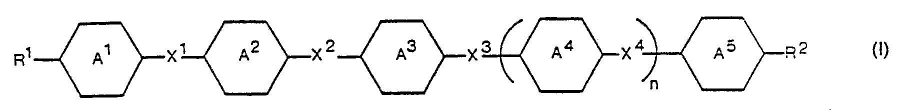 dans laquelle n est égal à 0 ou 1 ; l'un des symboles X¹ ou X² représente un groupe ester -COO- ou ―OOC― et l'autre, ainsi que les symboles X³ et X⁴, représentent une liaison covalente simple ou bien l'un de ces groupes représente le groupe éthylène ―CH₂CH₂―; les cycles A¹ et A5 sont des cycles de formule 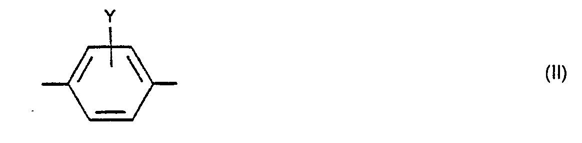 ou des cycles trans-1,4-cyclohexylène ; les cycles A², A³ et A⁴ sont des cycles de formule II ou bien, à condition qu'ils ne soient pas reliés par une liaison covalente simple à au moins un des deux autres de ces cycles, des cycles trans-1,4-cyclohexylène ; avec la restriction que l'un au moins des cycles présents doit être un cycle de formule II ; Y représente l'hydrogène ou bien encore, sur l'un des cycles de formule Il qui n'est pas relié par une liaison covalente simple à un autre cycle, le fluor, le chlore ou un groupe méthyle ; et R¹ et R² représentent des groupes alkyle à chaîne droite en C 1-C 7 ou bien encore, sur un cycle de formule II, des groupes alcoxy à chaîne droite en C 1-C 7 ; avec la restriction que, lorsque n est égalà 0, que X² représente ―COO― ou ―OOC― et que X¹ et X³ représentent des liaisons covalentes simples, les cycles A¹ et A² ou les cycles A³ et A5 ne peuvent être en même temps des cycles trans-1,4-cyclohexylène.

3. Composés selon la rev. 2, caractérisés en ce que Y représente l'hydrogène.

4. Composés selon la rev. 2 ou 3, caractérisés en ce que l'un des symboles X¹ ou X² représente un groupe ester -COO- ou -OOC- et l'autre ainsi que les symboles X³ et X⁴ représentent des liaisons covalentes simples ou bien, lorsque X² représente un groupe ester, X¹ peut également représenter un groupe éthylène ―CH₂CH₂―.

5. Composés selon l'une des rev. 2 à 4, caractérisés en ce que l'un au moins des cycles présents est un cycle trans-1,4-cyclohexylène.

6. Composés selon l'une des rev. 2 à 5, caractérisés en ce que n est égal à 1.

7. Composés selon la rev. 6, caractérisés en ce que X² représente un groupe ester -COO- ou -OOC-.

8. Mélange à cristaux liquides contenant un ou plusieurs composés de formule I définie dans la rev. 2 et une ou plusieurs autres substances appropriées à cristaux liquides et/ou non à cristaux liquides.

9. Procédé de préparation des composés de formule 1 définie dans la rev. 2, caractérisé en ce que
a) pour préparer les composés de formule I dans laquelle X¹ représente un groupe ester-COO-ou -OOC-, on estérifie un composé de formule générale 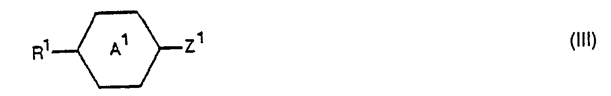 et un composé de formule générale 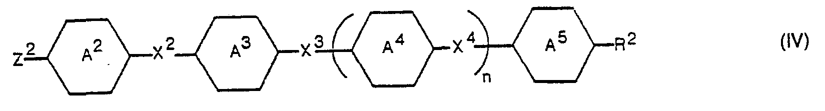 dans lesquels l'un des groupes Z¹ et Z² représente le groupe carboxyle et l'autre le groupe hydroxy, et A¹, A², A³, A⁴, A⁵, R¹, R², X², X³, X⁴ et n ont les significations indiquées dans la rev. 2, ou des dérivés réactifs de ces composés, ou bien
b) pour préparer les composés de formule I dans laquelle X² représente un groupe ester ―COO― ou -OOC-, on estérifie un composé de formule générale 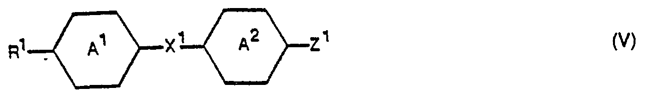 et un composé de formule générale 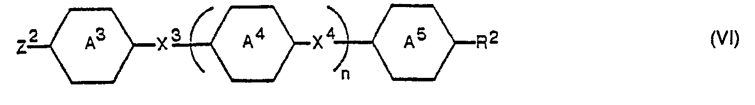 dans laquelle l'un des groupes Z¹ et Z² est le groupe carboxyle et l'autre le groupe hydroxy et A¹, A², A₃, A⁴, A⁵, R¹, R², X¹, X³, X⁴ et n ont les significations indiquées dans la rev. 2, ou des dérivés réactifs de ces composés.

10. Utilisation des composés de formule I définie dans la rev. 2 dans des applications électro-optiques.

## Revendications (Revendications pour l'(les) Etat(s) contractant(s) suivant(s) : AT)

1. Utilisation des composés de formule générale 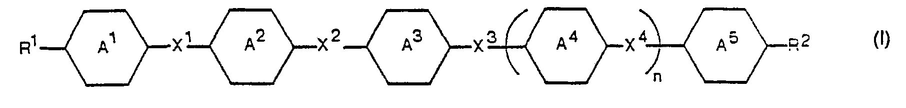 dans laquelle n est égal à 0 ou 1 ; l'un des symboles X¹ ou X² représente un groupe ester -COO- ou ―OOC― et l'autre, ainsi que les symboles X³ et X⁴, représentent des liaisons covalentes simples, ou bien l'un de ces symboles représente le groupe éthylèn ―CH₂CH₂―; les cycles A¹ et A5 sont des cycles de formule 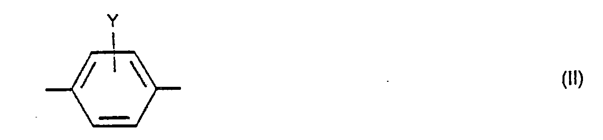 ou des cycles trans-1,4-cyctohexylène ; les cycles A², A³ et A⁴ sont des cycles de formule II ou bien encore, à condition qu'ils ne soient pas reliés par une liaison covalente simple à au moins un des deux autres de ces cycles, des cycles trans-1,4-cyclohexylène ; avec la condition que l'un au moins des cycles présents est un cycle de formule Il ; Y représente l'hydrogène ou bien encore, sur l'un des cycles de formule II qui n'est pas relié par une liaison covalente simple à un autre cycle, le fluor, le chlore ou un groupe méthyle ; et R¹ et R² représentent des groupes alkyle à chaîne droite en C 1-C 7 ou bien encore, sur un cycle de formule II, des groupes alcoxy à chaîne droite en C 1-C 7, en tant que phases stationnaires à cristaux liquides dans la chromatographie en phase gazeuse.

2. Mélange à cristaux liquides contenant un ou plusieurs 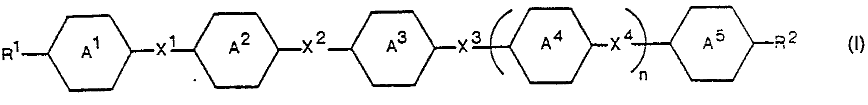 dans laquelle n est égal à 0 ou 1 ; l'un des symboles X¹ ou X² représente un groupe ester ―COO― ou -OOC- et l'autre ainsi que les symboles X³ et X⁴, représentent des liaisons covalentes simples, ou bien l'un de ces symboles représente le groupe éthylène ―CH₂CH₂―; les cycles A' et A5 sont des cycles de formule 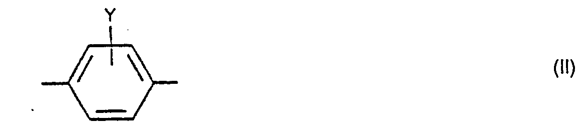 ou des cycles trans-1,4-cyclohexylène ; les cycles A², A³ et A⁴ sont des cycles de formule Il ou bien, à condition qu'ils ne soient pas reliés par une liaison covalente simple à au moins l'un des deux autres de ces cycles, des cycles trans-1,4-cyclohexylène ; avec la restriction que l'un au moins des cycles présents est un cycle de formule Il ; Y représente l'hydrogène ou bien encore, sur un cycle de formule II qui n'est pas relié par une liaison covalente simple à un autre cycle, le fluor, le chlore ou un groupe méthyle ; et R¹ et R² représentent des groupes alkyle à chaîne droite en C 1-C 7 ou bien encore, sur un cycle de formule Il, des groupes alcoxy à chaîne droite en C 1-C 7 ; avec la restriction que, lorsque n est égal à 0, que X² représente -COO- ou -OOC- et que X¹ et X³ représentent des liaisons covalentes simples, les cycles A¹ et A² ou les cycles A³ et A5 ne peuvent être en même temps des cycles trans-1,4-cyclohexylène, et une ou plusieurs autres substances appropriées à cristaux liquides et/ou non à cristaux liquides.

3. Mélange à cristaux liquides selon la rev. 2, caractérisé en ce que Y représente l'hydrogène.

4. Mélange à cristaux liquides selon la rev. 2 ou 3 caractérisé en ce que l'un des symboles X¹ ou X² représente un groupe ester ―COO― ou ―OOC― et l'autre ainsi que les symboles X³ et X⁴, représentent des liaisons covalentes simples, ou bien, lorsque X² représente un groupe ester, X¹ peut représenter également un groupe éthylène ―CH₂CH₂―.

5. Mélange à cristaux liquides selon l'une des rev. 2 à 4, caractérisé en ce que l'un au moins des cycles présents est un cycle trans-1,4-cyclohexylène.

6. Mélange à cristaux liquides selon l'une des rev. 2 à 5, caractérisé en ce que n est égal à I.

7. Mélange à cristaux liquides selon la rev. 6, caractérisé en ce que X² représente un groupe ester ―COO― ou ―OOC―.

8. Procédé de préparation des composés de formule I définie dans la rev. 2, caractérisé en ce que
a) pour préparer des composés de formule I dans laquelle X¹ représente un groupe ester ―COO― ou -OOC-, on estérifie un composé de formule générale 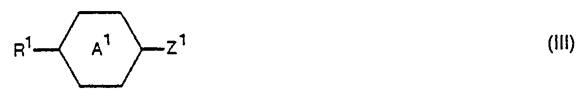 et un composé de formule générale 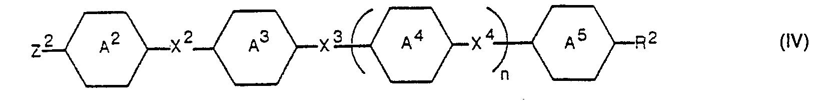 dans lesquels l'un des groupes Z¹ et Z² est le groupe carboxyle et l'autre le groupe hydroxy et A¹, A², A³, A⁴, A5, R¹, R², X², X³, X⁴ et n ont les significations indiquées dans la rev. 2, ou des dérivés réactifs de ces composés, ou bien
b) pour préparer des composés de formule I dans laquelle X² représente un groupe ester ―COO― ou -OOC-, on estérifie un composé de formule générale 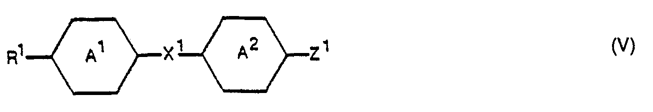 et un composé de formule générale 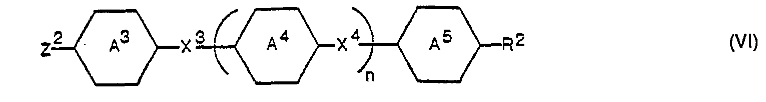 dans lesquels l'un des groupes Z¹ et Z² est le groupe carboxyle et l'autre le groupe hydroxy et A¹, A², A³, A⁴, A⁵, R¹, R², X^{l}, X³, X⁴ et n ont les significations indiquées dans la rev. 2, ou des dérivés réactifs de ces composés.

9. Utilisation des composés de formule I définie dans la rev. 2 dans des applications électro-optiques.

## Revendications (Revendications pour l'(les) Etat(s) contractant(s) suivant(s) : DE, GB)

1. Utilisation des composés de formule générale 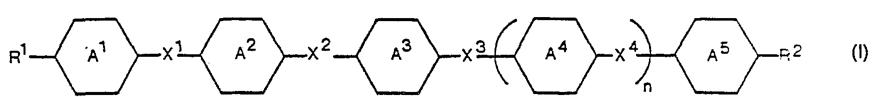 dans laquelle n est égal à 0 ou 1 ; l'un des symboles X¹ ou X² représente un groupe ester ―COO― ou -OOC- et l'autre, ainsi que les symboles X³ et X⁴, représentent une liaison covalente simple, ou bien l'un de ces symboles représente le groupe éthylène ―CH₂CH₂―; les cycles A¹ et A⁵ sont des cycles de formule 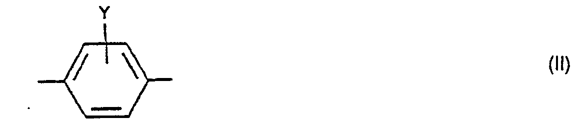 ou des cycles trans-1,4-cyclohexylène ; les cycles A², A³ et A⁴ sont des cycles de formule II, ou bien, à condition qu'ils ne soient pas reliés par une liaison covalente simple à au moins un des deux autres de ces cycles, des cycles trans-1,4-cyclohexylène ; avec la restriction que l'un au moins des cycles présents est un cycle de formule Il ; Y représente l'hydrogène ou bien, sur l'un des cycles de formule II qui n'est pas relié par une liaison covalente simple à un autre cycle, le fluor, le chlore ou un groupe méthyle ; et R¹ et R² représentent des groupes alkyle à chaîne droite en C 1-C 7 ou bien encore, sur un cycle de formule Il, des groupes alcoxy à chaîne droite en C 1-C 7, en tant que phases stationnaires à cristaux liquides dans la chromatographie en phase gazeuse.

2. Composés de formule générale 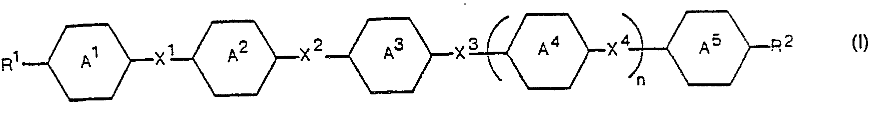 dans laquelle n est égal à 0 ou 1 ; l'un des symboles X¹ ou X² représente un groupe ester -COO- ou -OOC- et l'autre, ainsi que les symbole X³ et X4, représentent une liaison covalente simple, l'un de ces symboles pouvant également représenter le groupe éthylène ―CH₂CH₂―; les cycles A¹ et A5 sont des cvcles de formule 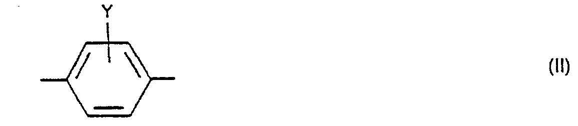 ou des cycles trans-1,4-cyclohexylène ; les cycles A², A³ et A⁴ sont des cycles de formule II ou bien, à condition qu'ils ne soient pas reliés par une liaison covalente simple à au moins un des deux autres de ces cycles, des cycles trans-1,4-cyclohexylène ; avec la restriction que l'un au moins des cycles présents doit être un cycle de formule Il ; Y représente l'hydrogène ou bien encore, sur l'un des cycles de formule II qui n'est pas relié par une liaison covalente simple à un autre cycle, le fluor, le chlore ou un groupe méthyle ; et R¹ et R² représentent des groupes alkyle à chaîne droite en C 1-C 7 ou bien encore, sur un cycle de formule II, des groupe alcoxy à chaîne droite en C 1-C 7 ; avec la restriction que lorsque n est égal à 0, que X² représente -COO- ou ―OOC― et que X¹ et X³ représentent des liaisons covalentes simples, les cycles A¹ et A² ou les cycles A³ et A5 ne peuvent être en même temps des cycles trans-1,4-cyclohexylène ; et avec une autre restriction selon laquelle il est exclu que, simultanément, n soit égal à 0, R¹ et R² représentent des groupes alkyle, X¹ et X³ représentent des liaisons covalentes simples et ou bien X² représente -COO-, le cycle A5 est un cycle trans-1,4-cyclohexylène et les cycles A¹, A² et A³ sont des cycles 1,4-phénylène, ou bien X² représente ―OOC―, le cycle A¹ est un cycle trans-1,4-cyclohexylène et les cycles A², A³ et A5 sont des cycles 1,4-phénylène ; et avec une autre condition selon laquelle il est exclu que, simultanément, n soit égal à 0, X² représente -COO- ou -OOC-, X¹ et X³ représentent des liaisons covalentes simples et R¹ et R² représentent des groupes propyle ; et une autre condition selon laquelle il est exclu que, simultanément, n soit égal à 0, X¹ représente ―COO―, X² représente une liaison covalente simple, X³ représente -CH₂CH₂-, les cycles A¹ et A5 soient des cycles trans-1,4-cyclohexy- lène et les cycles A² et A³ des cycles 1,4-phénylène.

3. Composés selon la rev. 2, caractérisés en ce que Y représente l'hydrogène.

4. Composés selon la rev. 2 ou 3, caractérisés en ce que l'un des symboles X¹ ou X² représente un groupe ester -COO- ou ―OOC― et l'autre, ainsi que les groupe X³ et X⁴, représentent des liaisons covalentes simples, ou bien, à condition que X² représente un groupe ester, X¹ peut également représenter un groupe éthylène ―CH₂CH₂―.

5. Composés selon l'une des rev. 2 à 4, caractérisés en ce que l'un au moins des cycles présents est un cycle trans-1,4-cyclohexylène.

6. Composé selon l'une des rev. 2 à 5, caractérisés en ce que n est égal à 1.

7. Composé selon la rev. 6, caractérisés en ce que X² représente un groupe ester ―COO― ou -OOC-.

8. Mélange à cristaux liquides contenant un ou plusieurs composé de formule I définie dans la rev. 2, et une ou plusieurs autres substances appropriées à cristaux liquides et/ou non à cristaux liquides.

9. Procédé de préparation des composés de formule I définie dans la rev. 2, caractérisé en ce que
a) pour préparer des composés de formule I dans laquelle X¹ représente un groupe ester-COO-ou -OOC-, on estérifie un composé de formule générale 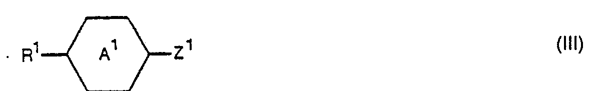 et un composé de formule générale 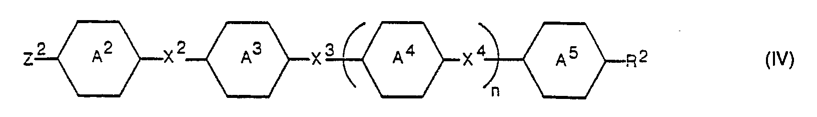 dans lesquels l'un des symboles Z¹ et Z² représente le groupe carboxyle et l'autre le groupe hydroxy, et A¹, A², A³, A⁴, A5, R¹, R², X², X³, X⁴ et n ont les significations indiquées dans la rev. 2, ou des dérivés réactifs de ces composés, ou bien
b) pour préparer les composés de formule I dans laquelle X² représente un groupe ester ―COO― ou -OOC-, on estérifie un composé de formule générale 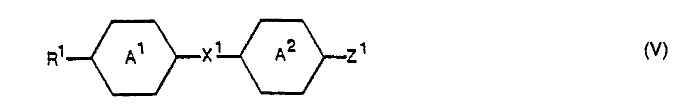 et un composé de formule générale 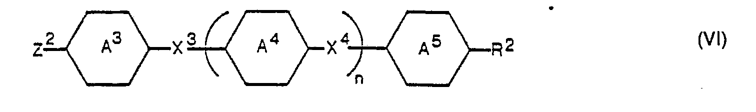 dans laquelle l'un des groupes Z¹ et Z² est le groupe carboxyle et l'autre le groupe hydroxy et A¹, A², A³, A⁴, A⁵, R¹, R², X¹, X³, X⁴ et n ont les significations indiquées dans la rev. 2, ou des dérivés réactifs de ces composés.

10. Utilisation des composés de formule 1 définie dans la rev. 2 dans des applications électro-optiques.

## Revendications (Revendications pour l'(les) Etat(s) contractant(s) suivant(s) : CH, FR, IT. LI)

1. Utilisation des composés de formule générale 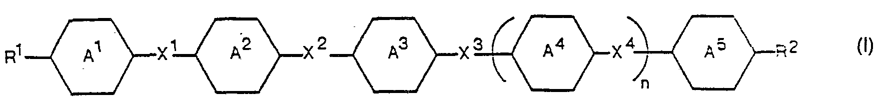 dans laquelle n est égal à 0 ou 1 ; l'un des symboles X¹ ou X² représente un groupe ester ―COO― ou -OOC-, et l'autre, ainsi que les symboles X³ et X⁴, représentent des liaisons covalentes simples, ou bien l'un de ces symboles représente le groupe éthylène ―CH₂CH2―; les cycles A¹ et A⁵ sont des cycles de formule 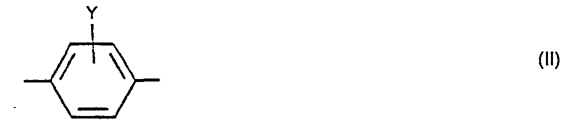 ou des cycles trans-1,4-cyclohexylène; les cycles A², A³ et A⁴ sont des cycles de formule II ou bien encore, à condition qu'ils ne soient pas reliés par une liaison covalente simple à au moins un des deux autres de ces cycles, des cycles trans-1,4-cyclohexylène ; avec la restriction que l'un au moins des cycles présents doit être un cycle de formule Il ; Y représente l'hydrogène ou bien encore, sur un cycle de formule II qui n'est pas relié par une liaison covalente simple à un autre cycle, le fluor, le chlore ou un groupe méthyle ; et R¹ et R² représentent des groupes alkyle à chaîne droite en C 1-C 7 ou bien encore, sur un cycle de formule Il, des groupes alcoxy à chaîne droite en C 1-C 7, en tant que phases stationnaires à cristaux liquides dans la chromatographie en phase gazeuse.

2. Composés de formule générale 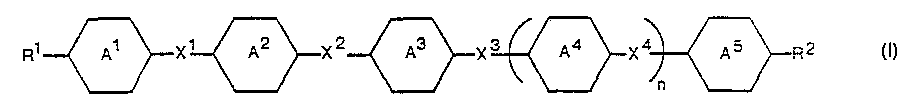 dans laquelle n est égal à 0 ou 1 ; l'un des symboles X¹ ou X² représente un groupe ester -COO- ou -OOC- et l'autre, ainsi que les symboles X³ et X⁴, représentent des liaisons covalentes simples, ou bien l'un de ces symboles représente le groupe éthylène ―CH₂CH₂―; les cycles A¹ et A5 sont des cycles de formule 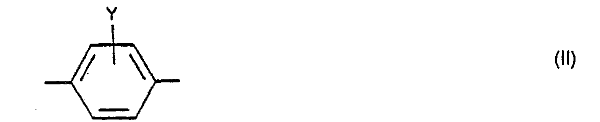 ou des cycles trans-1,4-cyclohexylène ; les cycles A², A³ et A⁴ sont des cycles de formule II ou bien, lorsqu'ils ne sont pas reliés par une liaison covalente simple à au moins un des deux autres de ces cycles, des cycles trans-1,4-cyclohexylène ; avec la restriction que l'un au moins des cycles présents est un cycle de formule Il ; Y représente l'hydrogène ou bien encore, sur l'un des cycles de formule II qui n'est pas relié par une liaison covalente simple à un autre cycle, le fluor, le chlore ou un groupe méthyle ; et R¹ et R² représentent des groupes alkyle à chaîne droite en C 1-C 7 ou bien encore, sur un cycle de formule II, des groupes alcoxy à chaîne droite en C 1-C 7 ; avec la condition que, lorsque n est égal à 0, que X² représente ―COO― ou -OOC- et que X¹ et X³ représentent des liaisons covalentes simples, les cycles A¹ et A² ou les cycles A³ et A⁵ ne peuvent être en même temps des cycles trans-1,4-cyclohexylène ; avec une autre condition selon laquelle il est exclu que, simultanément, n soit égal à 0, R¹ et R² représentent des groupes alkyle, X¹ et X³ représentent des liaisons côvalentes et ou bien X² représente -COO-, le cycle A⁵ soit un cycle trans-1,4-cyclohexylène et les cycles A¹, A² et A³ soient des cycles 1,4-phénylène, ou bien X² représente -OOC-, le cycle A¹ soit un cycle trans-1,4-cyclohexylène et les cycles A², A³ et A5 soient des cycles 1,4-phénylène ; et avec une autre condition selon laquelle il est exclu que, simultanément, n soit égal à 0, X² représente -COO- ou -OOC-, X¹ et. X³ représentent des liaisons covalentes simples et R¹ et R² représentent des groupes propyle.

3. Composés selon la rev. 2, caractérisés en ce que Y représente l'hydrogène.

4. Composés selon la rev. 2 ou 3, caractérisés en ce que l'un des symboles X¹ ou X² représente un groupe ester ―COO― ou -OOC- et l'autre, ainsi que les symboles X³ et X⁴, représentent des liaisons covalentes simples, ou bien, lorsque X² représente un groupe ester, X¹ peut également représenter un groupe éthylène ―CH₂CH₂―.

5. Composés selon l'une des rev. 2 à 4, caractérisés en ce que l'un au moins des cycles présents est un cycle trans-1,4-cyclohexylène.

6. Composés selon l'une des rev. 2 à 5, caractérisés en ce que n est égal à 1.

7. Composés selon la rev. 6, caractérisés en ce que X² représente un groupe ester ―COO― ou ―OOC―.

8. Mélange à cristaux liquides contenant un ou plusieurs composés de formule I définie dans la rev. 2 et une ou plusieurs autres substances appropriées à cristaux liquides et/ou non à cristaux liquides.

9. Procédé de préparation des composés de formule I définie dans la rev. 2, caractérisé en ce que
a) pour préparer les composés de formule I dans laquelle X¹ représente un groupe ester ―COO― ou -OOC-, on estérifie un composé de formule générale 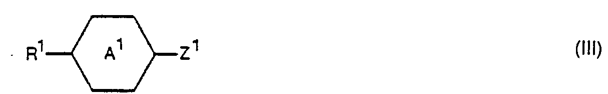 et un composé de formule générale 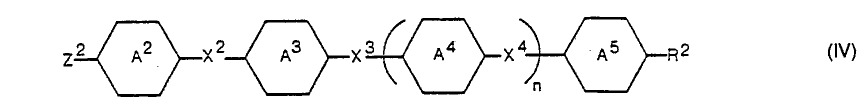 dans lesquels l'un des symboles Z¹ et Z² représente le groupe carboxyle et l'autre le groupe hydroxy, et A¹, A², A³, A⁴, A⁵, R¹, R², X², X³, X⁴ et n ont les significations indiquées dans la rev. 2, ou des dérivés réactifs de ces composés, ou bien
b) pour préparer les composés de formule I dans laquelle X² représente un groupe ester -COO-ou -OOC-, on estérifie un composé de formule générale 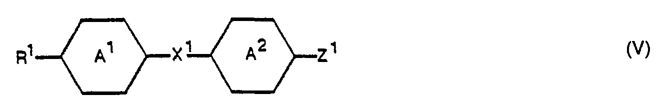 et un composé de formule générale 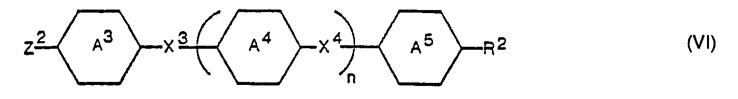 dans lesquels l'un des symboles Z¹ et Z² représente le groupe carboxyle et l'autre le groupe hydroxy, et A¹, A², A³, A⁴, A⁵, R¹, R², X¹, X³, X⁴ et n ont les significations indiquées dans la rev. 2, ou des dérivés réactifs de ces composés.

10. Utilisation des composés de formule I définie dans la rev. 2 dans des applications électro-optiques.
